# EUROPÄISCHE PATENTSCHRIFT

(11) **EP 2 424 225 B1**
(45) Veröffentlichungstag und Bekanntmachung des Hinweises auf die Patenterteilung: **20.03.2019**
(21) Anmeldenummer: 11179393.1
(22) Anmeldetag: 30.08.2011
(51) Int. Cl.: H04N 5/232, H04N 7/14, H04N 7/15

(54) **Bilderfassungssystem und Verfahren zum Erfassen eines Objekts**
Imaging system and method for detecting an object
Système de détection d'image et procédé destiné à la détection d'un objet

(30) Priorität: 30.08.2010 DE 102010035834
(43) Veröffentlichungstag der Anmeldung: 29.02.2012
(73) Patentinhaber: Vodafone GmbH, 40549 Düsseldorf (DE)
(72) Erfinder: Tzvetkov, Vesselin Dimitrov, 61440 Oberursel (DE)
(74) Vertreter: Müller & Schubert

(56) Entgegenhaltungen:
- EP-A1- 1 551 171
- EP-A2- 0 439 334
- EP-A2- 1 770 356
- WO-A2-03/044734
- GB-A- 2 351 635
- GB-A- 2 375 682
- GB-A- 2 403 363
- US-A- 5 844 599
- US-A1- 2002 154 811
- US-A1- 2007 242 086
- US-A1- 2010 066 676

## Beschreibung

Die vorliegende Erfindung betrifft zunächst ein Videokonferenzsystem mit den Merkmalen des Oberbegriffs von Patentanspruch 1. Weiterhin betrifft die Erfindung auch ein Verfahren zum Erfassen eines Teilnehmers einer Videokonferenz mittels eines Videokonferenzsystems.

Bei den meisten Videokonferenzsystemen, unabhängig von der Teilnehmerzahl wird ein statisches Bild der Teilnehmer gezeigt. Das übertragene Bild beziehungsweise der übertragene Bildausschnitt der Teilnehmer ändert sich während der Sitzung nicht. Somit erfolgt keine Bildanpassung bei beispielsweise einer Bewegung des aktiven, des beispielsweise sprechenden Teilnehmers. Es erfolgt keine Änderung der Vergrößerung auf den aktiven Teilnehmer, der Fokussierung auf den aktiven Teilnehmer oder der Blickwinkelanpassung zu dem aktiven Teilnehmer. Ein sich bewegender Teilnehmer kann mit den bekannten Videokonferenzsystemen nicht effektiv verfolgt werden. Zwar existieren beispielsweise Face-Detection Lösungen, jedoch weisen diese Lösungen Nachteile bezüglich schnellen und größeren Bewegungen eines Teilnehmers auf, so dass der Teilnehmer bei beispielsweise schnellen und größeren Bewegung nicht auf dem empfangenen und übertragenen Bild beziehungsweise dem Bildausschnitt für die anderen Videokonferenzteilnehmer zu sehen ist.

Dies führt dazu, dass die Teilnehmer vor der Kamera auf unnatürliche Art und Weise stillsitzen, was folglich zu einem unnatürlichen und unrealistischen Gefühl bei allen Teilnehmern führt, da Körperbewegungen während eines Gesprächs natürlich sind und zu jeder Präsentation gehören.

In der GB 2 375 682 A, von der die vorliegende Erfindung ausgeht, trägt der Nutzer des Verfahrens einen Tag, der von einer Kamera erfasst wird. Dadurch kann der Träger des Tags, der sich beispielsweise in einem themenpark befindet, automatisch erfasst und ausfindig gemacht werden.

Weitere Lösungen auf dem Gebiet der Bilderfassungssysteme sind beispielsweise in der US 5,844,599 A, der EP 1 551 171 A1, der GB 2 351 635 A, der US 2007/242086 A1, der EP 1 770 356 A2 oder der US 2002/154811 A1 beschrieben.

In anderem Zusammenhang sind in der US 7 706 576 B1 ein Verfahren sowie ein System zum dynamischen Videoausgleich von Bildern beschrieben. Dabei wird während einer Videokonferenz mittels eines Bilderfassungssystems ein Videokonferenzteilnehmer aufgenommen, das Gesicht des Konferenzteilnehmers erkannt und die Bildauflösung im Bereich des Gesichtes des Konferenzteilnehmers erhöht. Dabei werden der Videokonferenzteilnehmer sowie die Umgebung der Videokonferenz mit einer Kamera optisch erfasst. Bei der bekannten Lösung werden beispielsweise das Gesicht eines sprechenden Videokonferenzteilnehmers sowie die Umgebung des Videokonferenzteilnehmers mittels eines Gesichtserkennungssystems erkannt und Merkmale der Umgebung des Videokonferenzteilnehmers, die für die Videokonferenz nicht erforderlich sind automatisch gelöscht. Dies führt zu einer besseren Wahrnehmung des aufgenommenen Videokonferenzteilnehmers durch die Videokonferenzpartner, da weniger Informationen, die die Videokonferenzpartner ablenken könnten, auf dem den Videokonferenzpartnern gezeigten Bild des beispielsweise sprechenden Videokonferenzteilnehmers zu sehen sind.

Nachteilig bei dieser bekannten Lösung ist allerdings, dass auch hier ein statisches Bild der Teilnehmer einer Videokonferenz übertragen wird, und dass sich der sprechende Videokonferenzteilnehmer nicht bewegen darf.

Der vorliegenden Erfindung liegt deshalb die Aufgabe zugrunde, ein Videokonferenzsystem mit einer Kamera zum Erfassen des Teilnehmers einer Videokonferenz, mit einer Bewegungseinrichtung zum Bewegen der Kamera und mit einer Steuerungseinrichtung zum Steuern der Kamera und/oder der Bewegungseinrichtung als auch ein Verfahren zum Erfassen eines Teilnehmers mittels eines Videokonferenzsystems bereitzustellen, mit dem die genannten Nachteile vermieden werden können.

Mittels der Aspekte der Erfindung kann somit insbesondere ein dynamisches Bild der Teilnehmer einer Videokonferenz, das ein natürliches Verhalten vor der Kamera erlaubt, übertragen werden. Dies ist beispielsweise ohne Einführung teurer Hardware möglich.

Die Aufgabe wird erfindungsgemäß gelöst durch das Videokonferenzsystem mit den Merkmalen gemäß dem unabhängigen Patentanspruch 1 sowie durch das Verfahren zum Erfassen eines Teilnehmers einer Videokonferenz mittels eines Videokonferenzsystems mit den Merkmalen gemäß dem unabhängigen Patentanspruch 10. Wei

tere Merkmale und Details der Erfindung ergeben sich auch den Unteransprüchen. Dabei gelten Merkmale und Details, die im Zusammenhang mit dem ersten Aspekt, dem erfindungsgemäßen Videokonferenzsystem beschrieben sind, selbstverständlich auch im Zusammenhang mit dem zweiten Aspekt, dem erfindungsgemäßen Verfahren, und umgekehrt. Somit wird hinsichtlich der Offenbarung zwischen den beiden Erfindungsaspekten wechselseitig vollinhaltlich aufeinander Bezug genommen und verwiesen.

Gemäß dem ersten Aspekt der Erfindung wird ein Videokonferenzsystem bereitgestellt, welches die Merkmale des unabhängigen Patentanspruchs 1 aufweist. Ein grundlegendes Merkmal der Erfindung besteht in einer Identifizierungsmarke für ein Videokonferenzsystem zur Anordnung an einem von dem Videokonferenz zu erfassenden Teilnehmers der Videokonferenz, die dadurch gekennzeichnet ist, dass die Identifizierungsmarke mindestens zwei von einander unterschiedliche Identifizierungselemente aufweist. Die Identifikationsmarke kann im Sinne der Erfindung auch als Kalibrierungsmarke, Einstellmarke und/oder Referenzmarke bezeichnet werden. Dies insbesondere, da die Identifikationsmarke vorzugsweise neben dem beispielsweise reinen Erfassen des Teilnehmers oder der Identifikationsmarke selber auch für das Kalibrieren, Einstellen, Ansteuern und/oder Auswählen zumindest eines Teils des Videokonferenzsystems verwendet werden kann.

Erfindungsgemäß ist die Identifizierungsmarke für das Videokonferenzsystem vorgesehen. Dabei ist die Erfindung nicht auf bestimmte Typen von Videokonferenzsystemen beschränkt. Zudem ist ein Videokonferenzsystem nicht auf die Erfassung von Bildern beschränkt. Mit dem erfindungsgemäßen Videokonferenzsystem können ebenfalls bewegte Bilder oder Videos und/oder Audiosignale aufgenommen werden.

Die Identifizierungsmarke wird an einem zu erfassenden Teilnehmer der Videokonferenz angeordnet. Der Teilnehmer soll dabei von dem Videokonferenzsystem erfasst werden. Dabei wird "angeordnet" im Lichte der vorliegenden Erfindung als lösbare und unlösbare Anordnung verstanden. So ist es beispielsweise möglich, dass die Identifizierungsmarke nach der Erfassung des Teilnehmers durch das Videokonferenzsystem entfernt werden kann. Es ist aber auch denkbar, dass die Identifizierungsmarke nach der Erfassung des Teilnehmers durch das Videokonferenzsystem an dem zu erfassenden beziehungsweise dem erfassten Teilnehmer verbleibt oder verbleiben kann.

Die Identifizierungsmarke weist mindestens zwei voneinander unterschiedliche Identifizierungselemente auf. Dabei ist die Anzahl der Identifizierungselemente nicht beschränkt. So kann die Identifizierungsmarke auch mehr als zwei voneinander unterschiedliche Identifizierungselemente aufweisen. Vorzugsweise weist die Identifizierungsmarke genau zwei Identifizierungselemente auf.

Die Identifizierungselemente sind auf der Identifizierungsmarke insbesondere in derartiger Weise ausgestaltet, dass die Identifizierungselemente Bestandteil der Identifizierungsmarke sind. Die Identifizierungselemente können beispielsweise auf die Identifizierungsmarke gedruckt, gemalt, gezeichnet, aufgeklebt oder in sonstiger Art und Weise Teil der identifizierungsmarke sein oder werden oder auf der Identifizierungsmarke ausgestaltet sein. Kombinationen von Ausgestaltungen sind selbstverständlich ebenfalls möglich. Die Ausgestaltung der Identifizierungselemente auf die Identifizierungsmarke ist nicht auf bestimmte Ausgestaltungen begrenzt.

Die Identifizierungselemente sind von einander unterschiedlich. Die Identifizierungselemente sollen sich insbesondere in einer Art unterscheiden, dass keine Verwechselung der Identifizierungselemente möglich ist oder sein kann. Zur Sicherstellung einer Unterscheidbarkeit der Identifizierungselemente ist es möglich, dass Kombinationen von Identifizierungselementen verwendet werden. Die Erfindung ist nicht auf bestimmte Identifizierungselemente beschränkt. Vorteilhafte, jedoch nicht beschränkende Beispiele hierzu werden im weiteren Verlauf der Beschreibung näher erläutert.

Vorzugsweise ist vorgesehen, dass die Identifizierungsmarke als Identifizierungselement wenigstens eine Farbmarkierung aufweist. Eine Farbmarkierung im Lichte der Erfindung ist eine Markierung mittels einer definierten Farbe. Dabei ist die Erfindung nicht auf eine besondere Farbe beschränkt. Vorteilhafterweise wird für eine Farbmarkierung eine andere Farbe als die Farbe, die der zu erfassende Teilnehmer aufweist, verwendet. Vorzugsweise wird eine Farbmarkierung durch eine rare Farbe ausgestaltet. Als rare Farben werden insbesondere Farben mit einer dezidierten Wellenlänge verstanden.

In bevorzugter Ausgestaltung weist die Identifizierungsmarke zwei oder mehr von einander unterschiedliche Farbmarkierungen auf. Dabei sollen sich vorzugsweise die Farbmarkierungen voneinander und von der Farbe, die der zu erfassende Teilnehmer aufweist, unterscheiden.

In bevorzugter Ausgestaltung müssen sich die Farben der Identifizierungselemente bei der Verwendung von zwei Farben eindeutig von den restlichen zu erfassenden Teilnehmern unterscheiden. Dafür können beispielsweise zwei rare Farben verwendet werden. Als nicht ausschließliche Beispiele für zwei rare Farben als zwei Identifizierungselemente für eine Identifizierungsmarke können beispielsweise die Farben "Hellgrün" und "Magenta" verwendet werden.

Bei mehr als einem zu erfassenden Teilnehmer kann jedem Teilnehmer eine eindeutige Identifikationsmarke mit eindeutiger Farbmarkierung zur eindeutigen Identifizierung zugeordnet werden.

In weiterer Ausgestaltung ist vorgesehen, dass die Identifizierungsmarke als Identifizierungselement mindestens ein graphisches Muster aufweist. Dabei ist das graphische Muster nicht auf bestimmte Muster beschränkt. Als graphische Muster sind zum Beispiel Dreiecke, Rechtecke, Quadrate, Vierecke, Sechsecke, Achtecke, Vielecke, n-Ecke, Kreise, Ellipsen, Pfeile, Kreuze, Sterne aber auch Buchstaben, Zahlen, Bilder, Fotos oder dergleichen möglich. Zudem sind auch Kombinationen von graphischen Mustern möglich.

Ebenso ist das graphische Muster nicht auf eine bestimmte Mustergröße beschränkt. Vorteilhafterweise weist das graphische Muster eine Größe beziehungsweise eine Fläche auf, die die Größe beziehungsweise die Fläche der Identifizierungsmarke nicht übersteigt.

Vorzugsweise weist die Identifizierungsmarke mehrere Identifizierungselemente auf, wobei die mehreren Identifizierungselemente von einander unterschiedliche graphische Muster aufweisen. Dabei unterscheiden sich die graphischen Muster derart, dass eine Verwechslung der graphischen Muster ausgeschlossen ist beziehungsweise ausgeschlossen werden kann. Die graphischen Muster sind sich in diesem Fall nicht ähnlich oder sehen nicht ähnlich aus oder weisen keine vergleichbare Geometrie auf. Besonders bevorzugt sind zwei unterschiedliche graphische Muster als Identifizierungselemente für eine Identifizierungsmarke vorgesehen. Durch die Anordnung mehrerer graphischer Muster kann durch die Anordnung beispielsweise ein neues beziehungsweise ein weiteres graphisches Muster entstehen.

Bei mehr als einem zu erfassenden Teilnehmer kann jedem Teilnehmer eine eindeutige Identifikationsmarke mit eindeutigem graphischen Muster zur eindeutigen Identifizierung zugeordnet werden, wobei das eindeutige graphische Muster aus mehreren graphischen Mustern bestehen kann.

In bevorzugter Ausführungsform wird wenigstens ein graphisches Muster als ein erstes Identifizierungselement der Identifizierungsmarke mit wenigstens einer Farbmarkierung als ein zweites Identifizierungselement der Identifizierungsmarke kombiniert.

Vorteilhafterweise werden zwei graphische Muster als Identifizierungselemente der Identifizierungsmarke mit zwei Farbmarkierungen als Identifizierungselemente der Identifizierungsmarke kombiniert, wobei die zwei Farbmarkierungen jeweils mit einer raren Farbe ausgebildet sein können. Dabei kann jede Farbmarkierungs- und graphische Musterkombination vorgesehen sein, die eine eindeutige Unterscheidung einer ersten Identifizierungsmarke von einer zweiten Identifizierungsmarke sowie weiteren Identifizierungsmarken ermöglicht.

Das Videokonferenzsystem umfasst wenigstens eine Kamera zum Erfassen, Aufnehmen und Wiedergeben des zu erfassenden Teilnehmers. Dabei ist die Erfindung nicht auf bestimmte Kameratypen beschränkt. Beispielsweise kann es sich bei einer Kamera um eine Videokamera, einen Camcorder, eine Digitalkamera, eine elektronische Kamera, ein Mobiltelefon oder dergleichen handeln.

Mit der Kamera wird der zu erfassende Teilnehmer derart erfasst, dass der zu erfassende Teilnehmer vollständig von der Kamera erfasst und der erfasste Teilnehmer als Bild an einem Ausgabegerät ausgegeben wird. Selbstverständlich kann auch nur ein Teil des zu erfassenden Teilnehmers erfasst und beispielsweise als Bildausschnitt ausgegeben beziehungsweise wiedergeben werden. Selbstverständlich kann die Kamera mehrere Teilnehmer erfassen. Im Lichte der Erfindung kann eine Vielzahl von zu erfassenden Teilnehmern auch als ein zu erfassender Teilnehmer angesehen werden.. Ebenso können Teile oder Ausschnitte von Teilnehmern, beispielsweise Gesichter von Personen erfasst werden.

Das wiedergegebene Bild entspricht insbesondere der Darstellung des erfassten Teilnehmers. Das wiedergegebene Bild kann vor der Wiedergabe durch ein Ausgabegerät auch in irgendeiner Art und Weise modifiziert und/oder bearbeitet und/oder verfremdet werden. Die Wiedergabe des Bildes kann auf jedem geeigneten Ausgabegerät erfolgen. Als Ausgabegeräte werden in nicht einschränkender Art und Weise beispielsweise, Bildschirme, Fernseher, Computermonitore, Displays, Displays von Mobiltelefonen oder dergleichen verstanden. Grundsätzlich kann es sich bei dem Ausgabegerät um wenigstens einen Bildschirm handeln, der wenigstens einer Kamera und/oder dem Bilderfassungssystem zugeordnet ist.

Mit der Bewegungseinrichtung der Kamera wird die Kamera bewegt. Dabei wird erfindungsgemäß die Kamera auf den zu erfassenden Teilnehmer bewegt. Die Bewegung kann dabei beispielsweise auf rotatorische Weise durch beispielsweise Schwenken, Drehen, Kippen, Neigen erfolgen. Vorgesehen ist auch, dass die Bewegung auf beispielsweise translatorische Weise beispielsweise durch Verfahren auf einem Schienensystem erfolgt. Ebenso sind Kombinationen aus verschiedenen beispielsweise rotatorischen und translatorischen Bewegungen möglich. Die Erfindung ist nicht auf spezielle oder einzelne Bewegungen beschränkt. So ist es vorzugsweise vorgesehen, dass die Kamera eine komplette, also vollständige Drehung machen kann. Im einfachsten Fall weist das Videokonferenzsystem eine Kamera auf. In anderer Ausgestaltung kann vorgesehen sein, dass das Videokonferenzsystem mehrere Kameras aufweist. Die Kameras sind, insbesondere beabstandet voneinander, an verschiedenen Positionen vorgesehen, beispielsweise an verschiedenen Stellen in einem Raum, in dem eine Videokonferenz stattfindet, Erfindungsgemäß ist vorgesehen, dass mit einer Steuereinrichtung die Kamera und/oder die Bewegungseinrichtung gesteuert werden. Steuern der Kamera kann in der Art und Weise erfolgen, dass die Steuereinrichtung alle Kamerafunktionen steuert. Ebenso vorstellbar ist, dass die Steuereinrichtung nur ausgewählte Kamerafunktionen steuert. Kamerafunktionen können beispielsweise Funktionen zum Erfassen, Fokussieren, Vergrößern, Aufnehmen und Wiedergeben von Objekten sein.

Ebenfalls ist erfindungsgemäß vorgesehen, dass die Steuereinrichtung nur die Bewegungseinrichtung steuert.

Erfindungsgemäß ist vorgesehen, dass das Videokonferenzsystem wenigstens eine Identifizierungsmarke zur Anordnung an einem von dem Videokonferenzsystem zu erfassenden Teilnehmer aufweist. Es ist vorgesehen, dass das Videokonferenzsystem den zu erfassenden Teilnehmer mittels der wenigstens einen an dem zu erfassenden Teilnehmer anzubringenden Identifizierungsmarke erfasst. Erfindungsgemäß werden oder sind an dem durch das Videokonferenzsystem zu erfassenden Teilnehmer zwei Identifizierungsmarken angeordnet.

Erfindungsgemäß ist zudem die wenigstens eine Identifizierungsmarke so an dem zu erfassenden Teilnehmer anzuordnen, dass der zu erfassende Teilnehmer mit der Identifizierungsmarke erfasst werden kann. Erfassen kann im Lichte der Erfindung als ein reines Erfassen eines Teilnehmers aber auch als Erfassen in Kombination mit einer weiteren Aktion, wie beispielsweise dem Bewegen auf den zu erfassenden Teilnehmer und/oder dem Identifizieren und/oder dem Fokussieren und/oder dem Vergrößern des zu erfassenden Teilnehmers, verstanden werden.

Erfindungsgemäß weist das Videokonferenzsystem zwei Identifizierungsmarken auf, die in bestimmter Weise, wie weiter unten noch näher erläutert wird, an dem zu erfassenden Teilnehmer befestigt sind.

Die Identifizierungsmarke(n) weist/weisen erfindungsgemäß mindestens zwei voneinander unterschiedliche Identifizierungselemente auf. Vorzugsweise sind die Identifizierungselemente in einer wie weiter oben beschriebenen Weise ausgebildet ist, so dass auf die vorstehenden Ausführungen zur Identifizierungsmarke verwiesen und vollinhaltlich Bezug genommen wird.

Vorzugsweise weist die wenigstens eine Identifizierungsmarke als Identifizierungselemente wenigstens eine Farbmarkierung, vorzugsweise mindestens zwei voneinander unterschiedliche Farbmarkierungen, und/oder mindestens ein graphisches Muster auf.

Bevorzugt weist die wenigstens eine Identifizierungsmarke als Identifizierungselemente wenigstens eine Farbmarkierung auf, die in der wenigstens einen Kamera als bekannte Farbe hinterlegt ist. Das bedeutet, dass die Identifizierungsmarke Farben aufweist, die der Kamera bekannt sind. Wenn die Kamera auf den zu erfassenden Teilnehmer mit der/den Identifizierungsmarke(n) gerichtet wird, können diese bekannten Farben einen besseren Abgleich mit dem Hintergrund und/oder eine bessere Kalibrierung der Kamera ermöglichen.

Die Kamera weist eine Suchereinrichtung und optional eine Vergrößerungseinrichtung und/oder eine Fokussiereinrichtung auf. Dabei kann vorgehen sein, dass die Kamera nur eine der Einrichtungen, oder alle Einrichtungen oder eine Kombination von Einrichtungen aufweist.

Mit der Suchereinrichtung der Kamera kann dabei ein zu erfassender Teilnehmer ermittelt und/oder das erfasst Bild festgelegt werden. Ebenso ist möglich, dass die Suchereinrichtung zusätzlich die Kontrolle beziehungsweise die Einstellung der Schärfe des Bildes des zu erfassenden Teilnehmers ermöglicht. Besonders bevorzugt kann die Suchereinrichtung den Ausschnitt des Bildes automatisch festlegen.

Mit der Suchereinrichtung wird die auf dem zu erfassenden Teilnehmer angebrachte wenigstens eine Identifizierungsmarke erfasst. Sofern für die Erfassung der Identifizierungsmarke eine Drehung der Kamera erforderlich ist, so kann die Kamera unter Verwendung der Bewegungseinrichtung eine teilweise oder komplette Drehung machen.

Beispielsweise können durch die Suchereinrichtung nach Erfassen einer Identifizierungsmarke die Identifikationselemente, welche als Farbmarkierungen ausgebildet sein können, ermittelt werden, so dass die Kamera nach den Identifikationselementen der Identifizierungsmarke ausgerichtet werden kann.

Mit der Vergrößerungseinrichtung kann das erfasste Bild des zu erfassenden Teilnehmers vorzugsweise auf eine definierte Größe vergrößert werden. Besonders bevorzugt kann die Vergrößerungseinrichtung den Teilnehmer automatisch vergrößern. Das Bild kann aber auch verkleinert werden, so dass das Bild angepasst wird. So ist mit der Vergrößerungseinrichtung ein Anpassen der Größe des erfassten Bild möglich. Angepasst im Lichte der Beschreibung wird als vergrößern und verkleinern verstanden.

Mit der Fokussiereinrichtung kann die Kamera den zu erfassenden Teilnehmer fokussieren. Fokussieren kann im Sinne der Erfindung beispielsweise als Einstellen der Schärfe des Bildes des zu erfassenden Teilnehmers verstanden werden. Besonders bevorzugt kann die Fokussiereinrichtung den zu erfassenden Teilnehmer automatisch fokussieren. Ebenso besonders bevorzugt kann die Fokussierung auf den zu erfassenden Teilnehmer dynamisch erfolgen.

Beispielsweise kann durch eine Identifizierungsmarke, welche zwei voneinander unterschiedliche Identifizierungselemente aufweist, mit der Vergrößerungseinrichtung der zu erfassende Teilnehmer schnell vergrößert und mit der Fokussiereinrichtung schnell fokussiert werden. Ebenfalls ist möglich, dass unter Verwendung der Vergrößerungseinrichtung eine Großaufnahme des zu erfassenden Teilnehmers gemacht wird, nachdem die Kamera auf den zu erfassenden Teilnehmer gedreht wurde beziehungsweise der zu erfassende Teilnehmer oder die Identifizierungsmarken des zu erfassenden Teilnehmers mittels der Suchereinrichtung erfasst hat.

Beispielsweise kann nach Erfassen wenigstens einer Identifizierungsmarke, die an einem zu erfassenden Teilnehmer angeordnet ist, mittels der Identifizierungsmarke der zu erfassende Teilnehmer mit der Fokussiereinrichtung dynamisch fokussiert werden und/oder mit der Vergrößerungseinrichtung vergrößert werden und/oder mit der Bewegungseinrichtung verfolgt werden.

Vorzugsweise kann mittels der Bewegungseinrichtung die Kamera bewegt werden, wobei gleichzeitig die Suchereinrichtung der Kamera die aufgenommenen Bilder beziehungsweise Informationen nach Identifizierungselementen von Identifizierungsmarken absucht beziehungsweise diese Identifizierungselementen identifiziert. Nachdem die Identifizierungselemente durch die Suchereinrichtung erfasst und identifiziert sind, kann beispielsweise das erfasste Bild mittels der Vergrößerungseinrichtung vergrößert und mittels der Fokussiereinrichtung fokussiert werden. Das Videokonferenzsystem kann durch die Bewegungseinrichtung und die Sucherfunktion die Kamera derart bewegen, dass bei Bewegungen des zu erfassenden Teilnehmers die Kamera mittels der Bewegungseinrichtung bewegt wird, so dass die erfasste wenigstens eine Identifizierungsmarke immer im Bild verbleibt beziehungsweise an einer definierten Position des Bildes verbleibt.

Zudem kann bei einer Größenänderung der Identifizierungsmarke durch die Vergrößerungsfunktion die Größe der Identifizierungsmarke und somit die Größe des zu erfassenden Teilnehmers auf dem Bild angepasst werden. Angepasst im Lichte der Beschreibung wird als vergrößern und verkleinern verstanden.

Beispielsweise kann mit der Sucherfunktion der Suchereinrichtung die Identifizierungselemente stets gefunden werden. So kann auch zu Beginn einer Videokonferenz die Kamera mit Hilfe der Suchereinrichtung und/oder der Steuereinrichtung und/oder der Bewegungseinrichtung eine Bewegung ausführen und zu erfassende Teilnehmer aufgrund von Identifizierungsmarken erfassen und identifizieren ohne dass die exakte Position im Vorfeld bekannt oder definiert war.

Ebenso ist vorzugsweise vorzusehen, dass die Kamera auf einem Teilnehmer gerichtet ist, nachdem die Suchereinrichtung zunächst Identifizierungsmarken identifiziert hat und durch eine Drehung des Teilnehmers dann keine Identifizierungsmarken mehr von der Suchereinrichtung identifiziert werden können. Die Kamera kann beispielsweise solange auf diesen Teilnehmer gerichtet sein und bleiben, selbst wenn die Identifizierungsmarken des Teilnehmers nicht mehr erfasst werden können, etwa wenn sich der Teilnehmer umdreht, bis die Kamera oder das Videokonferenzsystem einen Befehl für die Suche und Identifizierung für einen anderen Teilnehmer und/oder eine wenigstens eine Identifizierungsmarke erhält. Zudem kann vorgesehen sein, dass die Suchereinrichtung die Identifizierungsmarken nach einem erneuten Umdrehen des Teilnehmers erneut erkennt und die Kamera auf den Teilnehmer erneut fokussiert und/oder das Bild vergrößert.

Zudem kann es erforderlich sein, dass die Kamera eine komplette Drehung macht und/oder eine Großaufnahme macht. Auf dem Bild werden dann die Identifizierungselemente der Identifizierungsmarke, ausgebildet beispielsweise als besonderen Farben, gefunden und die Kamera daraufhin ausgerichtet.

In vorzugsweiser Ausgestaltung weist das Videokonferenzsystem eine Einrichtung zum Empfangen von Audiosignalen, eine Einrichtung zur Ermittlung der Quelle der Audiosignale und eine Einrichtung zum Definieren der Quelle der Audiosignale als von der Kamera zu erfassendes Objekt auf.

Mit einer Einrichtung zum Empfangen von Audiosignalen werden erfindungsgemäß Audiosignale empfangen, wobei die Erfindung nicht auf bestimmte Einrichtungen zum Empfangen von Audiosignalen beschränkt ist. Eine Einrichtung zum Empfangen von Audiosignalen kann beispielsweise ein Mikrofon sein. Es sind jedoch auch andere Einrichtungen zum Empfangen von Audiosignalen denkbar. Die Einrichtung zum Empfangen von Audiosignalen kann zudem beispielsweise aus einem oder mehreren Mikrofonen bestehen.

Mit der Einrichtung zur Ermittlung der Quelle der Audiosignale wird die Quelle, also der Ursprung der Audiosignale ermittelt. Dabei kann die Einrichtung beispielsweise mit der Einrichtung zum Empfangen von Audiosignalen in der Form verbunden sein, dass ein Informationsaustausch zwischen den beiden Einrichtungen möglich ist. Informationsaustausch im Lichte der Erfindung wird auch als Datenaustausch verwendet. Wenn die Einrichtung zum Empfangen von Audiosignalen beispielsweise aus einem oder mehreren Mikrofonen besteht, so kann die Ermittlung der Quelle der Audiosignale durch Austausch in Form einer Übertragung von Informationen zwischen den Einrichtungen erfolgen.

Weist die Einrichtung zum Empfangen von Audiosignalen beispielsweise nur ein Mikrofon auf, so erfolgt die Ermittlung der Quelle der Audiosignale vorzugsweise durch einen Informationsaustausch zwischen der Einrichtung zum Empfangen von Audiosignalen und der Einrichtung zur Ermittlung der Quelle der Audiosignale.

Weist die Einrichtung zum Empfangen von Audiosignalen beispielsweise mehrere Mikrofone auf, so kann die Ermittlung der Quelle der Audiosignale vorzugsweise über einen Informationsaustausch zwischen der Einrichtung zum Empfangen von Audiosignalen und der Einrichtung zur Ermittlung der Quelle der Audiosignale erfolgen, indem in der Einrichtung zur Ermittlung der Quelle der Audiosignale ein Laufzeitunterschied zwischen gesendeten und empfangenen Signalen ermittelt wird.

Mit der Einrichtung zum Definieren der Quelle der Audiosignale wird die Quelle, also der Ursprung der Audiosignale definiert. Dazu kann ein Informationsaustausch zwischen der Einrichtung zum Definieren der Quelle der Audiosignale und/oder der Einrichtung zum Empfangen von Audiodaten und/oder Einrichtung zum Ermitteln der Quelle der Audiosignale erfolgen.

Beispielsweise kann die Definition der Quelle der Audiosignale derart erfolgen, dass bei Verwendung eines Mikrofons zur Ermittlung der Quelle der Audiosignale ein Informationsaustausch zwischen den Einrichtungen erfolgt und dass die Position des Mikrofons bekannt ist, so dass die Einrichtung zum Definieren der Quelle der Audiosignale die Quelle der Audiosignale definieren kann.

Die Definition der Quelle der Audiosignale kann beispielsweise auch derart erfolgen, dass bei Verwendung mehrerer Mikrofone zur Ermittlung der Quelle der Audiosignale ein Informationsaustausch zwischen den Einrichtungen erfolgt und dass die Position der Mikrofone durch einen Laufzeitunterschied zwischen den Signalen ermittelt wird, so dass die Einrichtung zum Definieren der Quelle der Audiosignale alle erforderlichen Informationen zur Verfügung hat, um die Quelle der Audiosignale definieren zu können.

In einer weiteren Ausführungsform ist es denkbar, dass mehrere Einrichtungen zum Empfangen von Audiosignalen vorgesehen sind und dass die Teilnehmer jeweils die aktive Einrichtung zum Empfangen von Audiosignalen aktiv einschalten beziehungsweise aktivieren muss. So kann durch einen Informationsaustausch zwischen der Einrichtung zum Empfangen von Audiosignalen und/oder der Einrichtung zur Ermittlung der Quelle von Audiosignalen und/oder der Einrichtung zum Definieren der Quelle von Audiosignalen die Quelle der Audiosignale definiert werden.

Zudem kann vorgesehen sein, dass die Einrichtung zum Empfangen von Audiosignalen und/oder die Einrichtung zur Ermittlung der Quelle von Audiosignalen und/oder die Einrichtung zum Definieren der Quelle von Audiosignalen in einer Einrichtung zusammengefasst sind.

Die Kamera ist dazu ausgelegt, zwei Identifizierungsmarken zu erfassen, die an einem zu erfassenden Teilnehmer angebracht sind, wobei die Identifizierungsmarken symmetrisch bezüglich einer Mittellinie des zu erfassenden Teilnehmers angebracht sind. Insbesondere sind die Identifikationsmarken derart am zu erfassenden Teilnehmer angeordnet oder anzuordnen, dass eine die Mittellinie des zu erfassenden Teilnehmers senkrecht schneidende Verbindungslinie zwischen den Identifizierungsmarken den erfassten Teilnehmer in einem Verhältnis von 1 zu 3 teilt. Bezüglich dieser Merkmale, insbesondere im Hinblick auf die damit erzielbaren Resultate, Effekte und Funktionen wird an dieser Stelle auf die entsprechenden Ausführungen zum erfindungsgemäßen Verfahren weiter unten Bezug genommen, so dass an dieser Stelle auf die entsprechenden Ausführungen weiter unten vollinhaltlich Bezug genommen und verwiesen wird.

In weiterer Ausgestaltung kann dass das Videokonferenzsystem einen Datenspeicher mit Daten über Größenangaben der Identifizierungsmarke(n) und/oder der darauf vorgesehenen Identifizierungselemente aufweisen, bis zu denen die von der wenigstens einen Kamera erfassten Identifizierungsmarke(n) und/oder Identifizierungselemente auf einem der wenigstens einen Kamera oder einem dem Bilderfassungssystem zugeordneten Ausgabegerät, insbesondere einem Bildschirm vergrößert werden können oder vergrößerbar sind. Die Identifizierungsmarke und/oder die Identifizierungselemente kann/können der Kamera somit einen Hinweis geben, wie weit für ein optimales Bild vergrößert, beispielsweise gezoomt, werden muss. Beispielsweise kann so weit vergrößert werden, bis die Identifizierungsmarke und/oder das Identifizierungselement auf der Marke eine bestimmte Größe auf dem Ausgabegerät, beispielsweise einem Bildschirm, hat. Wenn das Größenverhältnis zwischen der Identifizierungsmarke und/oder dem Identifizierungselement auf der einen Seite, und dem zu erfassenden Teilnehmer auf der anderen Seite, bekannt ist, erreicht man bei diesem Vergrößerungsgrad auch die richtige Größe des Teilnehmers. Denn es gilt die grundlegende Gleichung, dass die Größe von Identifizierungsmarke/Identifizierungselement zur Größe des Teilnehmers im Bild gleich große ist wie die die Größe von Identifizierungsmarke/Identifizierungselement zur Größe des Teilnehmers in Realität.

Bevorzugt weist das Videokonferenzsystem gemäß der vorliegenden Erfindung Mittel zur Durchführung des nachfolgend beschriebenen erfindungsgemäßen Verfahrens auf, so dass bezüglich der Ausgestaltung und Funktionsweise des Bilderfassungssystems auch auf die nachfolgenden Ausführungen zum erfindungsgemäßen Verfahren vollinhaltlich Bezug genommen und verwiesen wird.

Gemäß einem weiteren Aspekt der Erfindung wird ein Verfahren zum Erfassen eines Teilnehmers einer Videokonferenz mittels eines wie vorstehend beschriebenen erfindungsgemäßen Videokonferenzsystems bereitgestellt, welches die Merkmale des unabhängigen Patentanspruchs 10 aufweist.

Erfindungsgemäß ist die Identifizierungsmarke für ein Videokonferenzsystem vorgesehen. Dabei ist die Erfindung nicht auf bestimmte Typen von Videokonferenzsystemen beschränkt. Zudem ist ein Videokonferenzsystem nicht auf die Erfassung von Bildern beschränkt. Mit dem erfindungsgemäßen Videokonferenzsystem können ebenfalls bewegte Bilder oder Videos und/oder Audiosignale aufgenommen werden.

Vorzugsweise ist vorgesehen, dass die Kamera die wenigstens eine an dem zu erfassenden Teilnehmer angebrachte Identifizierungsmarke vollständig erfasst.

Ebenso vorzugsweise ist vorgesehen, dass die Kamera, die mit einer Bewegungseinrichtung zum Bewegen der Kamera verbunden ist, mittels einer Steuereinrichtung zum Steuern der Kamera automatisch auf die wenigstens eine erfasste Identifizierungsmarke ausgerichtet wird.

Ebenfalls kann die Kamera, die mit einer Bewegungseinrichtung zum Bewegen der Kamera verbunden ist, mittels einer Steuereinrichtung zum Steuern der Bewegungseinrichtung automatisch auf die wenigstens eine erfasste Identifizierungsmarke ausgerichtet werden.

Ebenfalls kann die Kamera, die mit einer Bewegungseinrichtung zum Bewegen der Kamera verbunden ist, mittels einer Steuereinrichtung zum Steuern der Kamera und/oder der Bewegungseinrichtung automatisch auf die wenigstens eine erfasste Identifizierungsmarke ausgerichtet werden.

Das Verfahren ist zum Erfassen einer an dem zu erfassenden Teilnehmer angebrachten Identifizierungsmarke ausgebildet, die in einer wie vorstehend beschriebenen Weise ausgebildet ist. Weiterhin ist vorgesehen, dass das Verfahren zum Erfassen eines Teilnehmers mittels eines Videokonferenzsystems ausgebildet ist, das in einer wie vorstehend beschriebenen Weise gemäß dem ersten Aspekt der Erfindung ausgebildet ist. Diesbezüglich wird insoweit auf die vorstehenden Ausführungen zur Identifizierungsmarke und zum Videokonferenzsystem weiter oben vollinhaltlich Bezug genommen und verwiesen.

Insbesondere kann die Identifizierungsmarke dieses Verfahrens mindestens zwei voneinander unterschiedliche Identifizierungselemente aufweisen.

Weiterhin weist das zum Erfassen eines Teilnehmers verwendete Videokonferenzsystem dieses Verfahrens wenigstens eine Kamera auf, die mit einer Bewegungseinrichtung zum Bewegen der Kamera und mit einer Steuerungseinrichtung zum Steuern der Kamera und/oder der Bewegungseinrichtung zum Erfassen eines Teilnehmers versehen ist, und die Merkmale der vorstehend beschriebenen erfindungsgemäßen Kamera aufweist, so dass auf die entsprechenden Ausführungen weiter oben vollinhaltlich Bezug genommen und verwiesen wird. Im einfachsten Fall ist nur eine Kamera vorgesehen. In anderer Ausgestaltung können auch mehrere Kameras vorgesehen sein.

Vorzugsweise kann das Verfahren zum Erfassen eines Teilnehmers mittels eines Videokonferenzsystems ein Videokonferenzsystem aufweisen, welches Audiosignale empfängt. Weiterhin kann das Verfahren vorzugsweise ein Videokonferenzsystem aufweisen, welches die Quelle der Audiosignale ermittelt. Ebenfalls weiterhin kann das Verfahren vorzugsweise ein Videokonferenzsystem aufweisen, welches die Quelle der Audiosignale als von der Kamera zu erfassenden Teilnehmer definiert.

Der Empfang von Audiosignalen kann beispielsweise durch ein Mikrofon erfolgen. Der Empfang von Audiosignalen ist jedoch nicht auf Mikrofone beschränkt.

Die Ermittlung der Quelle der Audiosignale kann auf verschiedene Arten erfolgen, wobei die Erfindung nicht auf eine Art beschränkt ist. Sofern nur eine Quelle von Audiosignalen durch das Bilderfassungssystem ermittelt werden soll, so kann die Ermittlung der Quelle von Audiosignalen beispielsweise durch den Standort der Empfangseinrichtung zum Empfangen von Audiosignalen bekannt sein. Sofern mehrere Quellen von Audiosignalen vorliegen, so kann die zu ermittelnde Quelle von Audiosignalen auf verschiedene Arten erfolgen, wobei die Erfindung nicht auf eine Art beschränkt ist. Beispielsweise kann die Quelle der Audiosignale durch eine Laufzeitberechnung ermittelt werden. Die Ermittlung der Quelle der Audiosignale bei mehreren Quellen von Audiosignalen kann auch durch Aktivieren einer Einrichtung zum Empfangen von Audiosignalen erfolgen. Beispielsweise kann dies durch Aktivieren und/oder Freischalten eines Mikrofons erfolgen.

Die Definition der Quelle der Audiosignale kann nach der Ermittlung der Quelle der Audiosignale erfolgen. Dabei kann beispielsweise ein Informationsaustausch zum Austausch von Informationen ausgebildet sein, so dass die Quelle der Audiosignale definiert werden kann.

Das Verfahren zum Erfassen eines Teilnehmers der Videokonferenz wird mittels eines Videokonferenzsystems durchgeführt, welches eine Kamera aufweist, wobei die Kamera mittels einer Suchereinrichtung einen zu erfassenden Teilnehmer erfasst und optional mittels einer Fokussiereinrichtung den erfassten Teilnehmer und/oder mittels einer Vergrößerungseinrichtung den erfassten Teilnehmer soweit vergrößert, bis die wenigstens eine erfasste Identifizierungsmarke und/oder die auf der Identifikationsmarke vorgesehenen Identifizierungselemente auf einem der wenigstens einen Kamera oder einem dem Videokonferenzsystem zugeordneten Ausgabegerät, insbesondere einem Bildschirm, eine vorgegebene Größe erreichen.

Insbesondere kann die Suchereinrichtung wie die weiter oben beschriebene Suchereinrichtung ausgebildet sein, so dass auf die entsprechenden Ausführungen weiter oben vollinhaltlich Bezug genommen und verwiesen wird.

Insbesondere kann die Fokussiereinrichtung wie die weiter oben beschriebene Fokussiereinrichtung ausgebildet sein, so dass auf die entsprechenden Ausführungen weiter oben vollinhaltlich Bezug genommen und verwiesen wird.

Des Weiteren kann insbesondere die Vergrößerungseinrichtung wie die weiter oben beschriebene Vergrößerungseinrichtung ausgebildet sein, so dass auf die entsprechenden Ausführungen weiter oben vollinhaltlich Bezug genommen und verwiesen wird.

Mittels der Suchereinrichtung wird die wenigstens eine Identifizierungsmarke erfasst. Dabei kann die Kamera auf die Identifizierungsmarke ausgerichtet werden oder durch die Bewegungseinrichtung automatisch die Identifizierungsmarke erfassen, indem sich die Kamera durch die Bewegungseinrichtung im Raum bewegt.

Mittels der Fokussiereinrichtung wird die wenigstens eine erfasste Identifizierungsmarke erfasst und mittels der Vergrößerungseinrichtung wird die wenigstens eine erfasste Identifizierungsmarke auf ein bestimmtes Verhältnis zum erfassten Teilnehmer vergrößert. Vorzugsweise wird die Identifizierungsmarke soweit vergrößert, so dass diese eine definierte Größe aufweist, die der Größe des erfassten Teilnehmers entspricht, so dass der erfasste Teilnehmer eine definierte Größe auf dem Ausgabegerät aufweist. Vorteilhafterweise wird die Identifizierungsmarke auf eine Größe vergrößert, so dass der erfasste Teilnehmer auf dem Ausgabegerät die Größe des Ausgabegeräts aufweist.

Dabei sind die Größe der Identifizierungsmarke sowie die durchschnittliche Größe des zu erfassenden Teilnehmers dem System und/oder der Steuereinrichtung insbesondere bekannt, so dass das Vergrößern einer Identifizierungsmarke auf eine definierte Größe dem Vergrößern des zu erfassenden Objekts auf eine definierte Größe entspricht.

Bei dem zu erfassenden Teilnehmer handelt es sich um einen Teilnehmer oder den Gesichtsbereich eines Teilnehmers einer Videokonferenz. Da die Größe eines Gesichts durchschnittlich bekannt ist, wird durch die Vergrößerung der Identifizierungsmarke auf eine definierte Größe das Gesicht eines Videokonferenzteilnehmers ebenfalls definiert vergrößert.

Durch die Suchereinrichtung und Bewegungseinrichtung der Kamera ist zudem möglich, dass bei Bewegungen des zu erfassenden Teilnehmers die Kamera durch die Bewegungseinrichtung bewegt wird, so dass die wenigstens eine Identifizierungsmarke stets durch die Suchereinrichtung erfasst werden kann.

Das Verfahren wird derart ausgeführt, dass die Kamera zwei an dem zu erfassenden Teilnehmer angebrachte Identifizierungsmarken erfasst. Die Identifizierungsmarken sind symmetrisch bezüglich einer Mittellinie des zu erfassenden Teilnehmers angebracht. Mittellinien können beispielsweise Achsen, Symmetrielinien, Symmetrieachsen, Rotationsachsen und dergleichen sein. Die Erfindung ist nicht auf bestimmte Mittellinien beschränkt. Die Mittellinie kann beispielsweise den zu erfassenden Teilnehmer in der Koordinatenachse, in der sich die Mittellinie erstreckt, halbieren. Eine Mittellinie kann dabei senkrecht, also vertikal oder waagerecht, also horizontal verlaufen.

Bei einer symmetrischen Anordnung der Identifizierungsmarken an dem zu erfassenden Teilnehmer ist beispielsweise der senkrechte Abstand der Identifizierungsmarken, welche sich von der Mittellinie aus gesehen gegenüberliegen, gleich.

Beispielsweise können zwei Identifizierungsmarken symmetrisch links und rechts auf einem Hemdkragen eines Videokonferenzteilnehmers angeordnet werden. Dabei kann mittels der Bewegungseinrichtung die Kamera derart bewegt werden, dass die erfassten und identifizierten Identifizierungsmarken stets mittig im Bild, also von der vertikalen Zentrallinie symmetrisch links und rechts neben der vertikalen Zentrallinie, liegen. Vorzugsweise kann eine die Mittellinie des zu erfassenden Objekts senkrecht schneidende Verbindungslinie zwischen den Identifizierungsmarken das erfasste Objekt in einem Verhältnis von 1 zu 3 teilen.

Als Verhältnis wird insbesondere die Länge der Abschnitte verstanden, die sich von einer senkrecht zur Mittellinie gedachten Linie, welche durch den Mittelpunkt der Identifizierungsmarken verläuft, und der dem Bild in zur gedachten Linie parallel verlaufenden begrenzenden Linie ergibt. Die zur gedachten Linie parallel verlaufende begrenzende Linie ist beispielsweise ein Teil der Bildbegrenzung, des Bildes oder des Bildrahmens. Durch diese auf die Mittellinie senkrecht gedachte Linie wird das Bild in zwei Teile geteilt. Die Länge der Linie, welche senkrecht zu der gedachten Linie steht und welche durch den Bildrahmen in ihrer Länge begrenzt wird, wird als Abschnitt bezeichnet. Durch die Teilung des Bildes kann ein Verhältnis der beiden Abschnitte eingestellt werden. Vorzugsweise beträgt dieses Verhältnis 1 zu 3.

Der erfasste Teilnehmer wird mittels einer senkrecht verlaufenden Mittellinie geteilt. Die gedachte Linie, welche senkrecht auf die senkrecht verlaufende Mittellinie steht, verläuft horizontal durch die Mittelpunkte der Identifizierungsmarken. Der Abstand der gedachten Linie zu der horizontalen Bildbegrenzung ist eine Länge. Da durch die gedachte Linie das Bild in zwei Teile unterteilt wird, sind zwei Abstände und somit zwei Längen vorhanden. Der geringere Abstand, also die kleinere Länge, liegt im unteren Bereich des Bildes, der größere Abstand, also die größere Länge, liegt im oberen Bereich des Bildes. Vorzugsweise ist die Länge des unteren Abstands dreimal geringer als die Länge des oberen Abstands, so dass das Verhältnis der Abstände 1 zu 3 beträgt.

Beispielsweise kann die auf die vertikale Mittellinie senkrecht verlaufende Linie die vertikale Mittellinie des Bildes des erfassten Teilnehmers in einer Proportion von eins zu drei Teilen, so dass bei Erfassung eines Gesichts eines Teilnehmers einer Videokonferenz das Gesicht in der Mitte des Bildes liegt.

Selbstverständlich sind auch andere Verhältnisse oder Proportionen der Abstände möglich. Die Verhältnisse können dabei von den zu erfassenden Teilnehmern und/oder den Ausgabegeräten abhängen.

Selbstverständlich ist beispielsweise möglich, dass bei einer Neigung beziehungsweise einem Kippen eines Teilnehmers insbesondere zu einer Seite, was dazu führt, dass der Abstand der beiden Identifizierungsmarken zum horizontal verlaufenden Bildrand unterschiedlich ist, die gedachte Linie, welche durch die Mittelpunkte der Identifizierungsmarken verläuft, nicht mehr parallel zum Bildrand des erfassten beziehungsweise angezeigten Bildes des Teilnehmers verläuft. In diesem Fall kann zur Ausrichtung des Bildes insbesondere ein durchschnittlicher Abstand gebildet wird. Ein durchschnittlicher Abstand kann dabei beispielsweise in Form einer mathematischen Mittelwertbildung von wenigstens zwei Werten ausgeführt sein, wobei die Werte auch Abstände beziehungsweise Längen sein können. Der erfasste Teilnehmer kann somit anhand des durchschnittlichen Abstands auf dem Ausgabegerät oder dem ausgegebenen Bild ausgerichtet werden.

Ebenso kann vorgesehen sein, dass der Winkel der Neigung beziehungsweise der Kippung erfasst und/oder ermittelt und das Bild entsprechend des Winkels derart gedreht wird, dass die Mittellinie des zu erfassenden Teilnehmers auf dem angezeigten Bild senkrecht oder waagerecht verläuft. Zudem kann in diesem Fall vorgesehen sein, dass der Abstand der Mittelpunkte der Identifizierungsmarken zu dem horizontal verlaufenden Bildrand entsprechend eingestellt wird.

Vorzugsweise kann die wenigstens eine Identifizierungsmarke als Identifizierungselemente wenigstens eine Farbmarkierung aufweisen, die in der wenigstens einen Kamera als bekannte Farbe hinterlegt ist, wobei die Kamera die erfasste Farbmarkierung mit den in der Kamera hinterlegten Farben vergleicht und wobei die Kamera auf Basis dieses Vergleichs einen Abgleich mit dem Hintergrund des erfassten Objekts und/oder eine Kalibrierung der wenigstens einen Kamera durchführt.

In weiterer Ausgestaltung kann das Bilderfassungssystem eine Einrichtung aufweisen, mit der ein blickwinkelabhängiger Größenvergleich zwischen wenigstens zwei Identifizierungsmarken am Teilnehmer durchgeführt wird, wobei bei Feststellung, dass eine festgestellte blickwinkelabhängige Größenabweichung einen vorgegebenen Wert überschreitet, die wenigstens eine Kamera über eine Bewegungseinrichtung in eine Position bewegt wird, in der die festgestellte blickwinkelabhängige Größenabweichung den vorgegebenen Wert unterschreitet, oder dass bei mehreren Kameras eine Kamera aktiviert wird, bei der eine festgestellte blickwinkelabhängige Größenabweichung den vorgegebenen Wert unterschreitet. In der Regel sind beide Identifizierungsmarken gleich groß. Je nach Blickwinkel, beispielsweise einem Blickwinkel von der Seite und nicht frontal, wirken die Identifizierungsmarken unterschiedlich groß. Daraus kann abgeleitet werden, in welche Richtung der Teilnehmer mit den Identifizierungsmarken gerichtet ist, beispielsweise, in welche Richtung der Träger der Identifizierungsmarken schaut. Entweder kann dann die Kamera verfahren werden, bis die Identifizierungsmarken möglichst wieder gleich groß erscheinen, etwa bei einer frontalen Ansicht. Oder aber, wenn mehrere Kameras vorhanden sind, kann dann eine besser positionierte Kamera angefahren beziehungsweise auf diese umgeschaltet werden.

Es werden eine Identifizierungsmarke für ein Videokonferenzsystem zur Anordnung an einem vom Videokonferenzsystem zu erfassenden Teilnehmer der Videokonferenz, ein Videokonferenzsystem mit einer Kamera zum Erfassen eines Teilnehmers der Videokonferenz, mit einer Bewegungseinrichtung zum Bewegen der Kamera und mit einer Steuerungseinrichtung zum Steuern der Kamera und/oder der Bewegungseinrichtung sowie ein Verfahren zum Erfassen eines Teilnehmers einer Videokonferenz mittels eines Videokonferenzsystems beschrieben. Damit kann ein dynamisches Bild der Teilnehmer einer Videokonferenz, das ein natürliches Verhalten vor der Kamera erlaubt, übertragen werden. Dies ist beispielsweise ohne Einführung teurer Hardware möglich.

Die Erfindung wird nun anhand von Ausführungsbeispielen unter Bezugnahme auf die beilliegenden Zeichnungen näher erläutert. Es zeigen
- Figur 1:: in schematischer Darstellung eine Identifizierungsmarke, mit zwei Farbmarkierungen und zwei graphischen Mustern als Identifizierungselemente;
- Figur 2:: in schematischer Darstellung eine Anbringung von zwei Identifizierungsmarken an einem Teilnehmer einer Videokonferenz;
- Figur 3:: in schematischer Darstellung eine Videokonferenz zwischen mehreren Teilnehmern unter Verwendung der oben beschriebenen erfindungsgemäßen Aspekte; und
- Figur 4:: in schematischer Darstellung eine Darstellung eines Teilnehmers auf einem Ausgabegerät.

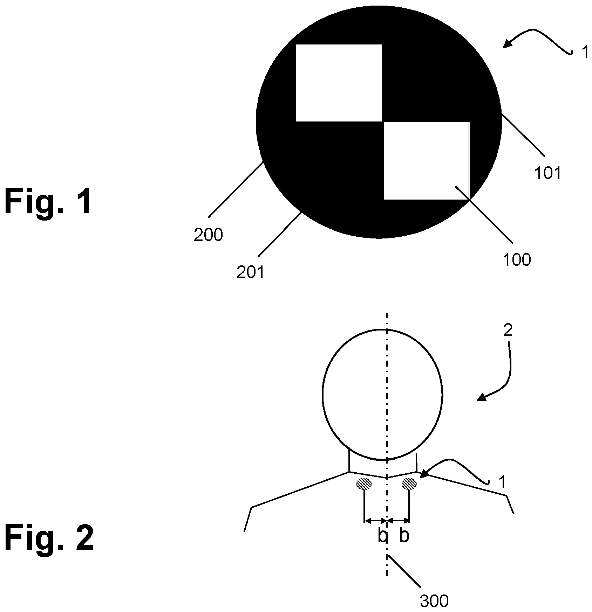

In Figur 1 ist in schematischer Darstellung eine Identifizierungsmarke 1 zur Anordnung an einem zu erfassenden Teilnehmer 2, der in Figur 2 gezeigt ist, dargestellt.

Die Identifikationsmarke 1 muss eindeutig von den restlichen Bildobjekten zu unterscheiden sein. Deswegen wird eine Farbpalette von mindestens zwei raren Farben, beispielsweise Farben mit dezidierten Wellenlängen, verwendet. Dies kann zum Beispiel "Hellgrün" und "Magenta" sein.

Zudem weist die Identifizierungsmarke 1 mehrere Identifizierungselemente auf. Zum einen weist die Identifizierungsmarke 1 als Identifizierungselemente zwei unterschiedliche Farbmarkierungen 100, 101 auf. Die in Figur 1 dargestellte Farbmarkierung 100 entspricht in der dargestellten Identifizierungsmarke 1 der Farbe "Weiß", die Farbmarkierung 101 der Farbe "Schwarz".

Zudem weist die Identifizierungsmarke 1 als Identifizierungselemente zwei graphische Muster 200, 201 auf. Das graphische Muster 200 entspricht einem "Kreis", das graphische Muster 201 entspricht einem "Quadrat. Das graphische Muster 201 wird in der dargestellten Identifizierungsmarke 1 viermal verwendet, wobei durch die Anordnung des graphischen Musters 201 ebenfalls noch ein weiteres graphisches Muster, welches verschiedene Farbmarkierungen 100, 101 aufweist, erzeugt wird.

In Figur 2 ist in schematischer Darstellung eine Anbringung von zwei identischen Identifizierungsmarken 1 aus Figur 1 an dem Kragen eines Teilnehmers 2 an einer Videokonferenz dargestellt. Die beiden identischen Identifizierungsmarken 1 sind im Abstand b von der Mittellinie 300 des zu erfassenden Teilnehmers 2 auf gleicher Höhe angeordnet. Die Mittellinie 300 teilt das Bild des zu erfassenden Teilnehmers 2 in senkrechter Weise.

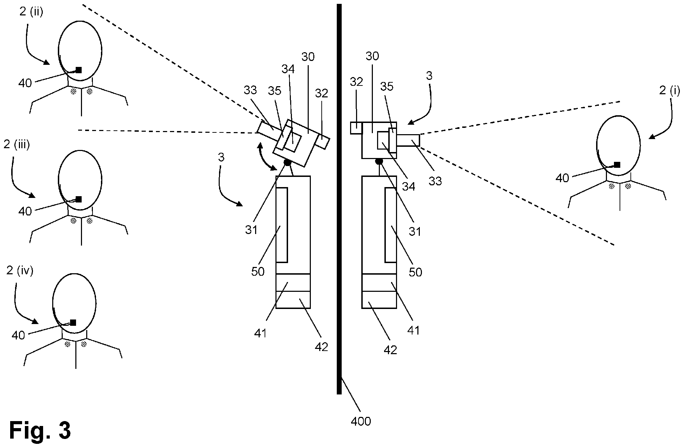

In Figur 3 ist in schematischer Darstellung eine Videokonferenz zwischen mehreren Teilnehmern 2 (i, ii, iii, iv) unter Verwendung der beschriebenen erfindungsgemäßen Aspekte dargestellt. Zudem wird ein Mechanismus für das Verfolgen, Fokussieren und das Umschalten zwischen Teilnehmern einer Videokonferenz beschrieben.

Jeder Teilnehmer 2 (i, ii, iii, iv) trägt zwei Identifikationsmarken 1 auf dem Kragen links und rechts gemäß Figur 2. Diese Identifikationsmarken 1 dienen zum dynamischen Fokussieren, Vergrößern und Verfolgen der Teilnehmer 2 (i, ii, iii, iv). Die Teilnehmer 2 (i, ii, iii, iv) verfügen zudem über eine Einrichtung zum Empfangen von Audiosignalen in Form eines Mikrofons 40. Die Teilnehmer 2 (i, ii, iii, iv) der Videokonferenz befinden örtlich getrennt voneinander. Beispielsweise befinden sich die Teilnehmer 2 (i, ii, iii, iv) in zwei unterschiedlichen Räumen, was durch die Wand 400 symbolisiert werden soll. In dem ersten Raum befindet sich ein Teilnehmer, nämlich Teilnehmer 2 (i), in dem zweiten Raum drei Teilnehmer, nämlich die Teilnehmer 2 (i, ii, iii). Der Teilnehmer 2 (i) verwendet zur Kommunikation mit den drei Teilnehmern 2 (ii, iii, iv) ein Videokonferenzsystem 3 bestehend aus einer Kamera 30, einer Bewegungseinrichtung 31 zum Bewegen der Kamera, einer Steuereinrichtung 32 zum Steuern der Kamera 30 und/oder der Bewegungseinrichtung 31, einer Suchereinrichtung 33, einer Vergrößerungseinrichtung 34, einer Einrichtung zum Empfangen von Audiodaten 40 in Form eines Mikrofons, einer Einrichtung zur Ermittlung der Quelle der Audiosignale 41, einer Einrichtung zum Definieren der Quelle der Audiosignale 42 sowie einem Ausgabegerät 50. Die Teilnehmer 2 (ii, iii, iv) verwenden ein zweites identisches Videokonferenzsystem für die Kommunikation mit Teilnehmer 2 (i).

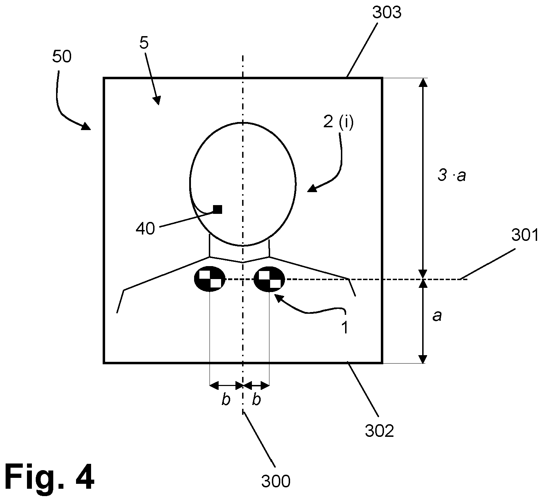

Eine Voraussetzung ist, dass die Kamera 30 eine Bewegungseinrichtung 31 beispielsweise in Form eines Bewegungsmotors, eine Vergrößerungseinrichtung 34, beispielsweise in Form einer Vergrößerungssteuerung sowie eine Fokussiereinrichtung 35, beispielsweise in Form einer Fokussteuerung aufweist. Die Steuerung wird nach dem beschrieben Mechanismus erfolgen, dass immer ein optimales Bild 5, welches in Figur 4 dargestellt ist, gezeigt wird. Ein optimales Bild 5 wird erreicht, wenn der sprechende Teilnehmer 2 (i) in Großauflösung gezeigt wird, auch wenn der Teilnehmer 2 (i) sich bewegt.

An Teilnehmer 2 (i) sind zum Erfassen zwei identische Identifizierungsmarken 1, wie in Figuren 1 und Figur 2 dargestellt, angeordnet.

Da nur Teilnehmer 2 (i) im ersten Raum an der Videokonferenz teilnimmt, ist das Videokonferenzsystem 3 auf Teilnehmer 2 (i) ausgerichtet. Die Ausrichtung des Videokonferenzsystems 3 erfolgt durch die Bewegungseinrichtung 31, wobei die Kamera 3 eine komplette Drehung machen kann. Das Videokonferenzsystem 3 wird durch die Steuereinrichtung 32 gesteuert.

Die Bewegung der Kamera 30 auf den Teilnehmer 2 (i) mittels der Bewegungseinrichtung 31 kann auch durch Drehung beziehungsweise Bewegung der Kamera 30 im Raum erfolgen. Die Kamera 30 wird solange durch die Bewegungseinrichtung 31 bewegt, bis die Suchereinrichtung 33 und Fokussiereinrichtung 35 spezifische Identifizierungsmarken 1 ermittelt.

Mit der Suchereinrichtung 33, auch Sucherfunktion genannt, können die Identifikationsmarken 1 ermittelt beziehungsweise gefunden werden. Mit der Fokussiereinrichtung 35 wird der erfasste Teilnehmer 2 (i) mit den Identifizierungsmarken 1 erfasst und der Teilnehmer 2 (i) fokussiert, also die richtige Brennweite, das heißt die Bildschärfe, eingestellt. Die Vergrößerungseinrichtung 34 vergrößert das Bild des erfassten Teilnehmers 2 (i) sowie die an diesem angeordneten Identifizierungsmarken 1. Sofern Teilnehmer 2 (i) spricht, wird dieser von dem ersten Videokonferenzsystem 3 aufgenommen und das aufgenommene Bild sowie die Audiosignale an ein zweites Videokonferenzsystem 3 in dem zweiten Raum, in dem sich die Teilnehmer 2 (ii, iii, iv) befinden, gesendet und dort auf dem Ausgabegerät 50 des zweiten Videokonferenzsystem 3 ausgegeben. Da in dem ersten Raum nur Teilnehmer 2 (i) an der Videokonferenz teilnimmt, ist die Quelle der Audiosignale bekannt.

Sofern sich Teilnehmer 2 (i) während der Videokonferenz bewegt, so kann das Videokonferenzsystem 3 beispielsweise durch die Steuereinrichtung 32 und die Suchereinrichtung 33 eine Positionsveränderung des Teilnehmers 2 (i) erkennen, da die Identifizierungsmarken 1 nicht mehr die geforderte definierte Größe aufweisen und/oder da sich die Position der Identifizierungsmarken 1 geändert hat. Das Videokonferenzsystem 3 kann bei Erkennen einer Positionsveränderung des Teilnehmers 2 (i) beispielsweise mittels der Bewegungseinrichtung 31 die Kamera 30 derart bewegen, dass sich die Identifizierungsmarken 1 wieder an der geforderten Position im Bild 5 befinden und/oder die Bewegungseinrichtung 31 bewegt die Kamera 30 auf die Identifizierungsmarken 1, welche durch die Suchereinrichtung 33 erkannt werden können, und die Vergrößerungseinrichtung 34 vergrößert die Identifizierungsmarke 1 und/oder die Fokussiereinrichtung 35 fokussiert die Identifizierungsmarke 1.

Mittels des Videokonferenzsystems 3 kann somit bei Bewegung des Teilnehmers 2(i) durch die Bewegungseinrichtung 31 und/oder die Steuereinrichtung 32 und/oder die Suchereinrichtung 33 und/oder die Vergrößerungseinrichtung 34 und/oder die Fokussiereinrichtung 35 den Teilnehmer 2 (i) erfassen und diesem bei Bewegungen des Teilnehmers 2 (i) folgen, so dass das Bild des Teilnehmers 2 (i) auf dem Ausgabegerät 50 des Teilnehmer 2 (ii, iii, iv) ausgegeben werden kann.

Sofern Teilnehmer 2 (ii) aus dem zweiten Raum auf die Ausführungen von Teilnehmer 2 (i) antworten möchte, so beginnt Teilnehmer 2 (ii) in sein Mikrofon 40 zu sprechen. Die Einrichtung zur Ermittlung der Quelle der Audiosignale 41 des zweiten Videokonferenzsystems 3 ermittelt die Quelle der Audiosignale und die Einrichtung zum Definieren der Quelle der Audiosignale 42 definiert die Quelle der Audiosignale. Die Quelle der Audiosignale liegt dem zweiten Videokonferenzsystem in Form von Raumkoordinaten vor. Mittels dieser Raumkoordinaten wird die Kamera 30 des zweiten Videokonferenzsystems 3 mittels der Bewegungseinrichtung 31 automatisch auf den Teilnehmer 2 (ii) gerichtet.

Durch die Suchereinrichtung 33 und die Fokussiereinrichtung 35 werden die Identifizierungsmarken 1 identifiziert und somit wird die exakte Position des Teilnehmers 2 (ii) ermittelt. Daran angeschlossen vergrößert die Vergrößerungseinrichtung 34 den erfassten Teilnehmer 2 (ii) auf eine definierte Größe. Das Bild 5 des Teilnehmers 2 (ii) wird mit den Audiosignalen an das Videokonferenzsystem 3 in dem ersten Raum gesendet und dort auf dem Ausgabegerät 50 ausgegeben.

Sofern ein anderer Teilnehmer 2 (iii) oder Teilnehmer 2 (iv) spricht, so kann das Videokonferenzsystem 3 die Position des Teilnehmers 2 (iii, iv) mittels der Suchereinrichtung 33 und der Fokussiereinrichtung 35 erfassen oder mittels der Einrichtung zum Empfangen von Audiosignalen 40 und der Einrichtung zur Ermittlung der Quelle der Audiosignale 41 und der Einrichtung zum Definieren der Quelle der Audiosignale 42 ermitteln. Sofern Teilnehmer 2 (iii) spricht, so kann durch die Bewegungseinrichtung 31 und der Steuereinrichtung 32 die Kamera 30 auf den aktiven Teilnehmer 2 (iii) gerichtet werden, so dass dann die bereits oben genannten weiter erforderlichen Schritte ausgeführt werden können.

Ebenso vorzugsweise kann dem Videokonferenzsystem 3 durch Aktivieren der Einrichtung zum Empfangen von Audiosignalen 40 des Teilnehmer 2 (iii) durch einen Teilnehmer 2 (ii, iii, iv) die Quelle der Audiosignale bekannt gemacht werden, so dass die Kamera 30 aufgrund gespeicherter Koordinaten der Einrichtung zum Empfangen von Audiosignalen 40 automatisch auf den Teilnehmer 2 (iii) ausgerichtet wird und diesen erfassen kann, so dass die bereits beschrieben Abläufe starten können, so dass auf diese Beschreibungen vollinhaltlich verwiesen und Bezug genommen wird.

Zudem kann die Kamera 30 das Bild 5 vergrößern, bis das graphische Muster 200, 201 auf der Identifizierungsmarke 1 eine bestimmte Größe proportional zum Bild 5 erreicht. Das graphische Muster 200, 201 steht in einer quasi festen Proportion zum menschlichen Gesicht, einem durchschnittlichen Gesicht. Die Größe der Identifizierungsmarke 1 und die Größe des durchschnittlichen Gesichts sind dem System vorzugsweise bekannt. Deswegen ist das Setzen eines graphischen Musters 200, 201 der Identifizierungsmarke 1 in einer bestimmten Proportion zum Bild 5 gleich dem Setzen des Gesichts in einer Proportion zum Bild 5. Das Fokussieren des Bildes 5 kann auf Basis des graphischen Muster 200, 201 erfolgen.

In Figur 4 ist in schematischer Darstellung ein Bild 5 eines Teilnehmers 2 (i) auf einem Ausgabegerät 50 dargestellt. Die Identifizierungsmarken 1 sind gemäß Figur 1 ausgeführt und gemäß Figur 2 auf dem Kragen des Teilnehmers 2 (i) im Abstand b von der senkrechten Mittellinie des Teilnehmers 2 (i) angeordnet.

Da sich die Identifizierungsmarken 1 quasi symmetrisch links und rechts auf dem Kragen des Teilnehmers 2 (i) befinden, müssen die Marken immer maximal mittig im Bild sein. Sie müssen somit symmetrisch links und rechts in der vertikalen Mittellinie, der Zentrallinie liegen.

Allgemein können zur Ausrichtung des Bildes 5 des aufgenommenen Teilnehmers 2 (i) auf dem Ausgabegerät 50 die Mittelpunkte der Identifizierungsmarken 1 ermittelt und eine Verbindungslinie 301 durch die ermittelten Mittelpunkte der Identifizierungsmarken 1 gelegt werden. Die Mittellinie 300 verläuft senkrecht zum unteren horizontal verlaufenden Bildrand 302 und hat den gleichen Abstand zu den Mittelpunkten der Identifizierungsmarken 1.

Wenn der zu erfassende Teilnehmer 2 (i) beispielsweise senkrecht steht, können zur Ausrichtung des Bildes 5 des aufgenommenen Teilnehmers 2 (i) auf dem Ausgabegerät 50 die Mittelpunkte der Identifizierungsmarken 1, welche auf gleicher Höhe in senkrechter Ausrichtung liegen, ermittelt und eine gedachte die Mittellinie 300 senkrecht schneidende Verbindungslinie 301 durch die Mittelpunkte der Identifizierungsmarken 1 gelegt werden.

Die Steuereinrichtung 32 steuert dabei die Bewegungseinrichtung 31 in der Form, dass das Bild des erfassten Teilnehmers 2 (i) in horizontaler Richtung vollständig erfasst wird. Weiterhin vergrößert die Vergrößerungseinrichtung 34 das Bild 5 soweit, dass die erfassten Identifizierungsmarken 1 eine definierte Größe haben. Dabei wird der erfasste Teilnehmer 2 (i) immer noch vollständig erfasst. Die Größe der Identifizierungsmarken 1 wird mittels der Steuereinrichtung 32 des Videokonferenzsystems erfasst und mit einem definierten Größenwert verglichen.

Nach dem Vergrößern des Bildes 5 des erfassten Teilnehmers 2 (i) steuert die Steuereinrichtung 32 die Bewegungseinrichtung 31 derart, dass der vertikale Abstand des Mittelpunkts der Identifizierungsmarke 1 zum unteren horizontal verlaufenden Rand 302 des Bildes 5 dem Abstand a entspricht. Bei diesem Abstand des Mittelpunkts der Identifizierungsmarke 1 zum unteren horizontal verlaufenden Rand 302 des Bildes 5 beträgt der Abstand des Mittelpunkts der Identifizierungsmarke 1 zum oberen horizontal verlaufenden Rand 303 dreimal a, so dass das Verhältnis des Mittelpunkts der Identifizierungsmarke 1 zum unteren horizontal verlaufenden Rand 302 beziehungsweise oberen horizontal verlaufenden Rand 303 des Bildes eins zu drei beträgt.

Wenn die beiden Identifizierungsmarken 1 einen unterschiedlichen vertikalen Abstand beispielweise zum unteren horizontal verlaufenden Rand 302 aufweisen, so wird der durchschnittliche vertikale Abstand der beiden Identifizierungsmarken 1 zum unteren horizontal verlaufenden Rand 302 genommen. Als durchschnittlich wird im Lichte der Erfindung insbesondere eine mathematische Mittelung, also die Bildung eines Mittelwerts zweier Werte, im vorliegenden Fall also die Abstände beziehungsweise die Längen verstanden.

Bei Änderung der Größe der Identifizierungsmarken 1 und/oder der Position des Teilnehmers 2 (i) wird eine Änderung der Größe der Identifizierungsmarken 1 und/oder des Verhältnisses der Abstände von dem Videokonferenzsystem 3 erkannt und durch das Videokonferenzsystem 3 erfolgt eine Anpassung beziehungsweise eine Korrektur derart, dass die Größe der Identifizierungsmarken 1 und/oder das Verhältnis der Abstände der definierten Größe der Identifizierungsmarken 1 und/oder dem definierten Verhältnis der Abstände entspricht.

Die senkrecht schneidende Verbindungslinie 301 zwischen den Identifizierungsmarken 1 muss die vertikale Mittellinie 300 des Bildes 5 in einem Verhältnis, also in einer Proportion von eins zu drei teilen, so dass das Gesicht in der Mitte des Bildes 50 liegt. Selbstverständlich können auch andere Proportionen, abhängig vom den zu erwartenden Gesichtern und Anzeigegeräten 50 genutzt werden.

### Bezugszeichenliste

- 1: Identifizierungsmarke
- 2: Teilnehmer (i, ii, iii, iv)
- 3: Videokonferenzsystem
- 5: Bild

- 30: Kamera
- 31: Bewegungseinrichtung
- 32: Steuereinrichtung
- 33: Suchereinrichtung
- 34: Vergrößerungseinrichtung
- 35: Fokussiereinrichtung
- 40: Einrichtung zum Empfangen von Audiosignalen (= Mikrofon)
- 41: Einrichtung zur Ermittlung der Quelle der Audiosignale
- 42: Einrichtung zum Definieren der Quelle der Audiosignale
- 50: Ausgabegerät

- 100: Farbmarkierung
- 101: Farbmarkierung
- 200: graphisches Muster
- 201: graphisches Muster
- 300: Mittellinie
- 301: senkrecht schneidende Verbindungslinie
- 302: unterer horizontaler Rand
- 303: oberer horizontaler Rand
- 400: Wand

- a: Abstand
- b: Abstand

## Patentansprüche

1. Videokonferenzsystem (3), mit einer Kamera (30) zum Erfassen eines Teilnehmers (2) einer Videokonferenz, wobei der zu erfassende Teilnehmer (2) vollständig oder teilweise von der Kamera (30) erfasst und als Bild oder als Bildausschnitt an einem Ausgabegerät ausgegeben wird, mit einer Bewegungseinrichtung (31) zum Bewegen der Kamera, und mit einer Steuerungseinrichtung (32) zum Steuern der Kamera und der Bewegungseinrichtung (31), **dadurch gekennzeichnet, dass** das Videokonferenzsystem (3) zwei Identifizierungsmarken (1) aufweist, die an dem von dem Videokonferenzsystem (3) zu erfassenden Teilnehmer (2) angeordnet oder anzuordnen sind und die zur Erfassung des mit den Identifizierungsmarken (1) versehenen Teilnehmers (2) dienen, dass jede Identifizierungsmarke (1) mindestens zwei voneinander unterschiedliche Identifizierungselemente aufweist, dass die Kamera (30) eine Suchereinrichtung (33) mit einer Sucherfunktion zum Finden der Identifizierungselemente aufweist, dass die Kamera (30) dazu ausgelegt ist, die zwei Identifizierungsmarken (1) zu erfassen, die symmetrisch bezüglich einer Mittellinie (300) des zu erfassenden Teilnehmers (2) angeordnet oder anzuordnen sind, dass die Bewegungseinrichtung dazu ausgelegt ist, die Kamera derart zu bewegen, dass der senkrechte Abstand der Identifizierungsmarken zu der Mittellinie (300), die sich von der Mittellinie (300) aus gesehen gegenüberliegen, gleich ist, und dass die Bewegungseinrichtung dazu ausgelegt ist, die Kamera derart zu bewegen, dass eine die Mittellinie (300) des zu erfassenden Teilnehmers (2) senkrecht schneidende Verbindungslinie (301) zwischen den Identifizierungsmarken (1), welche horizontal durch die Mittelpunkte der Identifizierungsmarken verläuft, das von der Kamera (30) erfasste Bild oder den Bildausschnitt in zwei Teile unterteilt, dass die Verbindungslinie in einem Abstand zur horizontalen Begrenzung des Bildes oder des Bildausschnitts liegt, dass der geringere Abstand zwischen der Verbindungslinie und der horizontalen Begrenzung im unteren Bereich des Bildes oder des Bildausschnitts liegt, und dass der größere Abstand zwischen der Verbindungslinie und der horizontalen Begrenzung im oberen Bereich des Bildes oder des Bildausschnitts liegt.

2. Videokonferenzsystem nach Anspruch 1, **dadurch gekennzeichnet, dass** die Identifizierungsmarken (1) als Identifizierungselemente wenigstens eine Farbmarkierung (100, 101) aufweist.

3. Videokonferenzsystem nach Anspruch 2, **dadurch gekennzeichnet, dass** die Identifizierungsmarken (1) als Identifizierungselemente mindestens zwei voneinander unterschiedliche Farbmarkierungen (100, 101) aufweisen.

4. Videokonferenzsystem nach einem der Ansprüche 1 bis 3, **dadurch gekennzeichnet, dass** die Identifizierungsmarken (1) als Identifizierungselemente mindestens ein graphisches Muster (200, 201) aufweisen.

5. Videokonferenzsystem nach Anspruch 2, **dadurch gekennzeichnet, dass** wenigstens eine Identifizierungsmarke (1) als Identifizierungselemente wenigstens eine Farbmarkierung (100, 101) aufweist, die in der Kamera als bekannte Farbe hinterlegt ist.

6. Videokonferenzsystem nach einem der Ansprüche 1 bis 5, **dadurch gekennzeichnet, dass** die Kamera (30) eine Vergrößerungseinrichtung (34) und/oder eine Fokussiereinrichtung (35) aufweist.

7. Videokonferenzsystem nach einem der Ansprüche 1 bis 6, **dadurch gekennzeichnet, dass** das Videokonferenzsystem eine Einrichtung zum Empfangen von Audiosignalen (40), eine Einrichtung zur Ermittlung der Quelle der Audiosignale (41) und eine Einrichtung zum Definieren der Quelle der Audiosignale (42) als von der Kamera (30) zu erfassendes Objekt (2) aufweist.

8. Videokonferenzsystem nach Anspruch 1, **dadurch gekennzeichnet, dass** die Identifikationsmarken (1) derart am zu erfassenden Objekt (2) angeordnet oder anzuordnen sind, dass die die Mittellinie (300) des zu erfassenden Teilnehmers (2) senkrecht schneidende Verbindungslinie (301) zwischen den Identifizierungsmarken (1) den erfassten Teilnehmer (2) in einem Verhältnis von 1 zu 3 teilt.

9. Videokonferenzsystem nach einem der Ansprüche 1 bis 8, **dadurch gekennzeichnet, dass** das Videokonferenzsystem (3) einen Datenspeicher mit Daten über Größenangaben der Identifizierungsmarken (1) und/oder der darauf vorgesehenen Identifizierungselemente aufweist, bis zu denen die von der Kamera (30) erfassten Identifizierungsmarken (1) und/oder Identifizierungselemente auf einem der Kamera (30) oder einem dem Videokonferenzsystem (3) zugeordneten Ausgabegerät, insbesondere einem Bildschirm vergrößert werden können oder vergrößerbar sind.

10. Verfahren zum Erfassen eines Teilnehmers (2) einer Videokonferenz mittels eines Videokonferenzsystems (3), wobei das Videokonferenzsystem (3) eine Kamera (30) zum Erfassen des Teilnehmers der Videokonferenz aufweist, wobei der zu erfassende Teilnehmer (2) vollständig oder teilweise von der Kamera (30) erfasst und als Bild oder Bildausschnitt an einem Ausgabegerät ausgegeben wird, wobei das Videokonferenzsystem (3) eine Bewegungseinrichtung (31) zum Bewegen der Kamera (30) und eine Steuereinrichtung (32) zum Steuern der Kamera (30) und der Bewegungseinrichtung (31) aufweist, wobei das Videokonferenzsystem (3) zwei Identifizierungsmarken (1) aufweist, die an dem von dem Videokonferenzsystem (3) zu erfassenden Teilnehmer (2) angeordnet sind und die zur Erfassung des mit den Identifizierungsmarken(1) versehenen Teilnehmers (2) dienen, wobei jede Identifizierungsmarke (1) mindestens zwei voneinander unterschiedliche Identifizierungselemente aufweist, wobei die zwei Identifizierungsmarken (1) symmetrisch bezüglich einer Mittellinie (300) des zu erfassenden Teilnehmers (2) angeordnet sind, und wobei die Kamera (30) eine Suchereinrichtung (33) mit einer Sucherfunktion zum Finden der Identifizierungselemente aufweist, **gekennzeichnet durch** folgende Schritte:
die Kamera (30) erfasst die zwei an dem zu erfassenden Teilnehmer (2) angebrachten Identifizierungsmarken (1), indem die Kamera (30) mittels der Suchereinrichtung (33) den zu erfassenden Teilnehmer (2) erfasst,
die Kamera (30), die mit der Bewegungseinrichtung (31) verbunden ist, wird mittels der Steuereinrichtung (32) und der Bewegungseinrichtung (31) auf die erfassten Identifizierungsmarken (1) ausgerichtet,
die Kamera (30) erfasst die zwei Identifizierungsmarken (1), die an dem zu erfassenden Teilnehmer (2) angebracht sind, indem die Bewegungseinrichtung (31) die Kamera (30) derart bewegt, dass der senkrechte Abstand der Identifizierungsmarken (1) zu der Mittellinie (300), die sich von der Mittellinie (300) aus gesehen gegenüberliegen, gleich ist, und indem die Bewegungseinrichtung (31) die Kamera (30) derart bewegt, dass eine die Mittellinie (300) des zu erfassenden Teilnehmers (2) senkrecht schneidende Verbindungslinie (301) zwischen den Identifizierungsmarken (1), welche horizontal durch die Mittelpunkte der Identifizierungsmarken (1) verläuft, das von der Kamera (30) erfasste Bild oder den Bildausschnitt in zwei Teile unterteilt, dass die Verbindungslinie (301) in einem Abstand zur horizontalen Begrenzung des Bildes oder des Bildausschnitts liegt, dass der geringere Abstand zwischen der Verbindungslinie (301) und der horizontalen Begrenzung im unteren Bereich des Bildes oder des Bildausschnitts liegt, und dass der größere Abstand zwischen der Verbindungslinie (301) und der horizontalen Begrenzung im oberen Bereich des Bildes oder des Bildausschnitts liegt.

11. Verfahren nach Anspruch 10, **dadurch gekennzeichnet, dass** das Videokonferenzsystem (3) über eine Einrichtung zum Empfangen von Audiosignalen (40) Audiosignale empfängt, dass das Videokonferenzsystem (3) über eine Einrichtung zur Ermittlung der Quelle der Audiosignale (41) die Quelle der Audiosignale ermittelt und dass im Videokonferenzsystem (3) über eine Einrichtung zum Definieren der Quelle der Audiosignale (42) die Quelle der Audiosignale als von der Kamera (30) zu erfassender Teilnehmer (2) definiert wird.

12. Verfahren nach einem der Ansprüche 10 oder 11, **dadurch gekennzeichnet, dass** die Kamera (30) mittels einer Fokussiereinrichtung (35) den erfassten Teilnehmer (2) fokussiert und/oder mittels einer Vergrößerungseinrichtung (34) den erfassten Teilnehmer (2) soweit vergrößert, bis die erfassten Identifizierungsmarken (1) und/oder die auf den Identifikationsmarken (1) vorgesehenen Identifizierungselemente auf einem der wenigstens einen Kamera (30) oder einem dem Videokonferenzsystem zugeordneten Ausgabegerät, insbesondere einem Bildschirm, eine vorgegebene Größe erreichen.

13. Verfahren nach einem der Ansprüche 10 bis 12, **dadurch gekennzeichnet, dass** wenigstens eine Identifizierungsmarke (1) als Identifizierungselemente wenigstens eine Farbmarkierung (100, 101) aufweist, die in der Kamera als bekannte Farbe hinterlegt ist, dass die Kamera (30) die erfasste Farbmarkierung (100, 101) mit den in der Kamera hinterlegten Farben vergleicht und dass die Kamera auf Basis dieses Vergleichs einen Abgleich mit dem Hintergrund des erfassten Objekts und/oder eine Kalibrierung der wenigstens einen Kamera (30) durchführt.

14. Verfahren nach einem der Ansprüche 10 bis 13, **dadurch gekennzeichnet, dass** das Videokonferenzsystem (3) eine Einrichtung aufweist, mit der ein blickwinkelabhängiger Größenvergleich zwischen wenigstens zwei Identifizierungsmarken (1) am Objekt (2) durchgeführt wird, das bei Feststellung, dass eine festgestellte blickwinkelabhängige Größenabweichung einen vorgegebenen Wert überschreitet, die Kamera (30) über die Bewegungseinrichtung in eine Position bewegt wird, in der die festgestellte blickwinkelabhängige Größenabweichung den vorgegebenen Wert unterschreitet, oder dass bei mehreren Kameras die Kamera aktiviert wird, bei der eine festgestellte blickwinkelabhängige Größenabweichung den vorgegebenen Wert unterschreitet.

## Claims

1. Video conferencing system (3), comprising a camera (30) for capturing a participant (2) of a video conference, whereby the participant (2) to be captured is wholly or partly captured by said camera (30) and is output as an image or as an image section to an output device, a movement device (31) for moving said camera, and a control device (32) for controlling the camera and the movement device (31) **characterized in that** the video conferencing system (3) comprises two identification tags (1), which are arranged or which are to be arranged on the participant (2) to be captured by the video conferencing system (3) and which serve for capturing the participant (2) being provided with the identification tags (1), that each identification tag (1) comprises at least two identification elements being different from each other, that the camera (30) comprises a viewfinder device (33) having a viewfinder function for finding the identification elements, the camera (30) being provided for detecting the two identification tags (1), which are symmetrically arranged or to be arranged with regard to the centreline (330) of the participant (2) to be detected, the movement device being provided for moving the camera in such a way that the perpendicular distance of the identification tags to said centreline (300), which are, as seen from the centreline (300), opposite to each other, is equal, and that the movement device is provided for moving the camera in such a way, that a connecting line (301), which perpendicularly traverses the centreline (300) of the participant (2) to be detected , between the identification tags (1), which horizontally passes through the central points of the identification tags, divides the image or the image section captured by said camera (30) into two portions, that the connecting line lies in a distance to the horizontal boundary of the image or the image section, that the lesser distance between the connecting line and the horizontal boundary lies in the lower portion of the image or the image section and that the greater distance between the connecting line and the horizontal boundary lies in the upper portion of the image or the image section.

2. Video conferencing system according to claim 1, **characterized in that** the identification tags (1) comprise at least one colour marking (100, 101) as identification elements.

3. Video conferencing system according to claim 2, **characterized in that** the identification tags (1) comprise at least to colour markings (100, 101) being different from each other as identification elements.

4. Video conferencing system according to anyone of claims 1 to 3, **characterized in that** the identification tags (1) comprise at least one graphical pattern (200, 201) as identification elements.

5. Video conferencing system according to claim 2, **characterized in that** at least one identification tag (1) comprises at least on colour marking (100, 101) as identification elements, which is recorded in the camera as a known colour.

6. Video conferencing system according to anyone of claims 1 to 5, **characterized in that** the camera (30) comprises a magnification device (34) and/or a focusing device (35).

7. Video conferencing system according to anyone of claims 1 to 6, **characterized in that** the video conferencing system comprises a device for receiving audio signals (40), a device for detecting the source of said audio signals, and a device for defining the source of said audio signals as an object (2) to be captured by said camera (30).

8. Video conferencing system according to claim 1, **characterized in that** the identification tags (1) are arranged at or are to be arranged at the object (2) to be captured in such a way, that the connecting line (301) between the identification tags (1) perpendicularly cutting the centreline (300) of the participant (2) to be captured, cuts the participant (2) to be captured in a ratio of 1 to 3.

9. Video conferencing system according to anyone of claims 1 to 8, **characterized in that** the video conferencing system (3) comprises a data memory with data on size information of the identification tags (1) and/or of the information elements being provided thereon, to which extent the identification tags (1) and/or the identification elements captured by said camera can be enlarged or are enlargeable on an output device, in particular a display, being allocated to said camera (30) or to said video conferencing system (3).

10. Method of capturing a participant (2) of a video conference by using a video conferencing system (3), said video conferencing system (3), comprising a camera (30) for capturing the participant (2) of the video conference, whereby the participant (2) to be captured is wholly or partly captured by said camera (30) and is output as an image or as an image section to an output device, whereby the video conferencing system (3) comprises a movement device (31) for moving said camera (30) and a control device (32) for controlling the camera (30) and the movement device (31), wherein the video conferencing system (3) comprises two identification tags (1), which are arranged on the participant (2) to be captured by the video conferencing system (3) and which serve for capturing the participant (2) being provided with the identification tags (1), wherein each identification tag (1) comprises at least two identification elements being different from each other, wherein the two identification tags (1) are symmetrically arranged with regard to a centreline (300) of the participant (2) to be captured, and wherein the camera (30) comprises a viewfinder device (33) having a viewfinder function for finding the identification elements, **characterized by** the following steps:
the camera (30) captures the two identification tags (1), which are arranged at the participant (29 to be captured, as the camera (30) captures the participant (2) to be captured by means of said viewfinder device (33)
the camera (30), which is connected to said movement device (31), is oriented towards the identification tags (1) to be captured by means of said control device (32) and said movement device (31),
the camera (30) captures the two identification tags (1), which are arranged at said participant (2) to be captured, by moving the camera (30) via said movement device (319 in such a way, that the perpendicular distance of the identification tags to said centreline (300), which are, as seen from the centreline (300), opposite to each other, is equal, and that the movement device moves the camera (30) in such a way, that a connecting line (301), which perpendicularly traverses the centreline (300) of the participant (2) to be detected , between the identification tags (1), which horizontally passes through the central points of the identification tags, divides the image or the image section captured by said camera (30) into two portions, that the connecting line (301) lies in a distance to the horizontal boundary of the image or the image section, that the lesser distance between the connecting line (301) and the horizontal boundary lies in the lower portion of the image or the image section and that the greater distance between the connecting line (301) and the horizontal boundary lies in the upper portion of the image or the image section.

11. Method according to claim 10, **characterized in that** the video conferencing system (3) receives audio signals via a device for receiving audio signals (40), that the video conferencing system (3) detects the source of the audio signals via a device for detecting the source of said audio signals (41), and that in the video conferencing system (3) the source of the audio signals is defined as the participant (2) to be captured by the camera (30) via a device for defining the source of said audio signals (42).

12. Method according to anyone of claims 10 or 11, **characterized in that** the camera (30) focuses the captured participant (2) via a focusing device (35) and/or enlarges the captured participant (2) via a magnification device (34) so such an extent, until the captured identification tags (1) and/or the identification elements being provided on said identification tags (1) reach a pre-set size on an output device, in particular a display, being allocated to said camera (30) or to said video conferencing system.

13. Method according to anyone of claims 10 to 12, **characterized in that** at least one identification tag (1) comprises at least on colour marking (100, 101) as identification elements, which is stored in the camera as a known colour, that the camera (30) compares the captured colour marking (100, 101) with the colours being stored in said camera, and that the camera, based on this comparison, performs an matching with the background of the captured object and/or a calibration of the at least one camera (30).

14. Method according to one of Claims 10 to 13, **characterized in that** the video conferencing system (3) comprises a device, by means of which a viewing angle-dependent size comparison between at least two identification marks (1) on the object (2) is carried out, that upon detection, that a detected viewing angle-dependent size deviation exceeds a predetermined value, the camera (30) is moved via the movement device in a position, in which the detected viewing angle-dependent size deviation is less than the predetermined value, or that in the case of several cameras, this camera is activated, in which a detected viewing angle-dependent size deviation is less than the predetermined value.

## Revendications

1. Système de visioconférence (3), avec une caméra (30) pour détecter un participant (2) d'une visioconférence, dans lequel le participant (2) à détecter est détecté intégralement ou partiellement par la caméra (30) et est délivré sous forme d'image ou sous forme d'extrait d'image à un appareil de sortie, avec un dispositif de déplacement (31) pour déplacer la caméra, et avec un dispositif de commande (32) pour commander la caméra et le dispositif de déplacement (31), **caractérisé en ce que** le système de visioconférence (3) comprend deux marques d'identification (1) qui sont agencées ou doivent être agencées au niveau du participant (2) à détecter par le système de visioconférence (3) et servent à la détection du participant (2) pourvu des marques d'identification (1), **en ce que** chaque marque d'identification (1) comprend au moins deux éléments d'identification différents les uns des autres, **en ce que** la caméra (30) comprend un dispositif viseur (33) avec une fonction de visée pour trouver les éléments d'identification, **en ce que** la caméra (30) est conçue pour détecter les deux marques d'identification (1) qui sont agencées ou doivent être agencées de manière symétrique par rapport à une ligne médiane (300) au niveau du participant (2) à détecter, **en ce que** le dispositif de déplacement est conçu pour déplacer la caméra de manière que la distance perpendiculaire des marques d'identification à la ligne médiane (300), qui sont en regard l'une de l'autre vues de la ligne médiane (300), soit identique, et **en ce que** le dispositif de déplacement est conçu pour déplacer la caméra de manière qu'une ligne de liaison (301) entre les marques d'identification (1), coupant perpendiculairement la ligne médiane (300) du participant (2) à détecter, qui passe horizontalement par les centres des marques d'identification, divise l'image détectée par la caméra (30) ou l'extrait d'image en deux parties, **en ce que** la ligne de liaison est située à une distance de la limite horizontale de l'image ou de l'extrait d'image, **en ce que** la distance la plus petite entre la ligne de liaison et la limite horizontale est située dans la zone inférieure de l'image ou de l'extrait d'image, et **en ce que** la distance la plus grande entre la ligne de liaison et la limite horizontale est située dans la zone supérieure de l'image ou de l'extrait d'image.

2. Système de visioconférence selon la revendication 1, **caractérisé en ce que** les marques d'identification (1) comprennent en tant qu'éléments d'identification au moins un marquage coloré (100, 101).

3. Système de visioconférence selon la revendication 2, **caractérisé en ce que** les marques d'identification (1) comprennent en tant qu'éléments d'identification au moins deux marquages colorés (100, 101) différents les uns des autres.

4. Système de visioconférence selon l'une quelconque des revendications 1 à 3, **caractérisé en ce que** les marques d'identification (1) comprennent en tant qu'éléments d'identification au moins un motif graphique (200, 201).

5. Système de visioconférence selon la revendication 2, **caractérisé en ce qu'**au moins une marque d'identification (1) comprend en tant qu'éléments d'identification au moins un marquage coloré (100, 101) qui est enregistré dans la caméra en tant que couleur connue.

6. Système de visioconférence selon l'une quelconque des revendications 1 à 5, **caractérisé en ce que** la caméra (30) comprend un dispositif d'agrandissement (34) et/ou un dispositif de mise au point (35).

7. Système de visioconférence selon l'une quelconque des revendications 1 à 6, **caractérisé en ce que** le système de visioconférence comprend un dispositif pour recevoir des signaux audio (40), un dispositif pour déterminer la source des signaux audio (41) et un dispositif pour définir la source des signaux audio (42) en tant qu'objet (2) à détecter par la caméra (30).

8. Système de visioconférence selon la revendication 1, **caractérisé en ce que** les marques d'identification (1) sont agencées ou doivent être agencées au niveau de l'objet à détecter (2) de manière que la ligne de liaison (301) coupant perpendiculairement la ligne médiane (300) du participant (2) à détecter divise le participant (2) détecté entre les marques d'identification (1) dans un rapport de 1 sur 3.

9. Système de visioconférence selon l'une quelconque des revendications 1 à 8, **caractérisé en ce que** le système de visioconférence (3) comprend une mémoire de données avec des données sur des indications d'agrandissement des marques d'identification (1) et/ou des éléments d'identification prévus sur celles-ci, jusqu'auxquelles les marques d'identification (1) et/ou les éléments d'identification détectés par la caméra (30) peuvent être agrandis ou sont agrandissables sur un appareil de sortie, en particulier un écran, associé à la caméra (30) ou au système de visioconférence (3).

10. Procédé pour détecter un participant (2) d'une visioconférence au moyen d'un système de visioconférence (3), dans lequel le système de visioconférence (3) comprend une caméra (30) pour détecter le participant de la visioconférence, dans lequel le participant (2) à détecter est détecté intégralement ou partiellement par la caméra (30) et est délivré sous forme d'image ou d'extrait d'image à un appareil de sortie, dans lequel le système de visioconférence (3) comprend un dispositif de déplacement (31) pour déplacer la caméra (30) et un dispositif de commande (32) pour commander la caméra (30) et le dispositif de déplacement (31), dans lequel le système de visioconférence (3) comprend deux marques d'identification (1) qui sont agencées ou doivent être agencées au niveau du participant (2) à détecter par le système de visioconférence (3) et servent à la détection du participant (2) pourvu des marques d'identification (1), dans lequel chaque marque d'identification (1) comprend au moins deux éléments d'identification différents les uns des autres, dans lequel les deux marques d'identification (1) sont agencées de manière symétrique par rapport à une ligne médiane (300) du participant (2) à détecter, et dans lequel la caméra (30) comprend un dispositif viseur (33) avec une fonction de visée pour trouver les éléments d'identification, **caractérisé par** les étapes suivantes :
la caméra (30) détecte les deux marques d'identification (1) placées sur le participant (2) à détecter tandis que la caméra (30) détecte au moyen du dispositif viseur (33) le participant (2) à détecter,
la caméra (30), qui est reliée au dispositif de déplacement (31), est orientée au moyen du dispositif de commande (32) et du dispositif de déplacement (31) sur les marques d'identification détectées (1),
la caméra (30) détecte les deux marques d'identification (1) qui sont placées sur le participant (2) à détecter tandis que le dispositif de déplacement (31) déplace la caméra (30) de manière que la distance perpendiculaire des marques d'identification (1) à la ligne médiane (300), qui sont en regard l'une de l'autre vues de la ligne médiane (300), soit identique, et tandis que le dispositif de déplacement (31) déplace la caméra (30) de manière telle qu'une ligne de liaison (301) entre les marques d'identification (1), coupant perpendiculairement la ligne médiane (300) du participant (2) à détecter, qui passe horizontalement par les centres des marques d'identification (1), divise l'image détectée par la caméra (30) ou l'extrait d'image en deux parties, en ce que la ligne de liaison (301) est située à une distance de la limite horizontale de l'image ou de l'extrait d'image, en ce que la plus petite distance entre la ligne de liaison (301) et la limite horizontale est située dans la zone inférieure de l'image ou de l'extrait d'image, et en ce que la plus grande distance entre la ligne de liaison (301) et la limite horizontale est située dans la zone supérieure de l'image ou de l'extrait d'image.

11. Procédé selon la revendication 10, **caractérisé en ce que** le système de visioconférence (3) reçoit des signaux audio par le biais d'un dispositif de réception de signaux audio (40), **en ce que** le système de visioconférence (3) détermine la source des signaux audio par le biais d'un dispositif de détermination de la source des signaux audio (41), et **en ce que**, dans le système de visioconférence (3), par le biais d'un dispositif de définition de la source des signaux audio (42), la source des signaux audio est définie en tant que participant (2) à détecter par la caméra (30).

12. Procédé selon l'une quelconque des revendications 10 ou 11, **caractérisé en ce que** la caméra (30) effectue une mise au point sur le participant (2) à détecter au moyen d'un dispositif de mise au point (35) et/ou agrandit le participant (2) à détecter au moyen d'un dispositif d'agrandissement (34) jusqu'à ce que les marques d'identification (1) détectées et/ou les éléments d'identification prévus sur les marques d'identification (1) atteignent une taille prédéfinie sur un appareil de sortie, en particulier un écran, associé à au moins un parmi l'au moins une caméra (30) ou le système de visioconférence.

13. Procédé selon l'une quelconque des revendications 10 à 12, **caractérisé en ce qu'**au moins une marque d'identification (1) comprend en tant qu'éléments d'identification au moins un marquage coloré (100, 101) qui est enregistré dans la caméra en tant que couleur connue, **en ce que** la caméra (30) compare le marquage coloré détecté (100, 101) avec les couleurs enregistrées dans la caméra, et **en ce que** la caméra exécute, sur la base de cette comparaison, une compensation avec l'arrière-plan de l'objet détecté et/ou un étalonnage de l'au moins une caméra (30).

14. Procédé selon l'une quelconque des revendications 10 à 13, **caractérisé en ce que** le système de visioconférence (3) comprend un dispositif avec lequel une comparaison de taille, en fonction de l'angle de vision, entre au moins deux marques d'identification (1) est exécutée au niveau de l'objet (2), **en ce que**, en cas de constatation qu'un écart de taille, en fonction de l'angle de vision, constaté dépasse une valeur prédéfinie, la caméra (30) est déplacée par le biais du dispositif de déplacement à une position dans laquelle l'écart de taille, en fonction de l'angle de vision, constaté tombe en dessous de la valeur prédéfinie, ou **en ce que**, s'il y a plusieurs caméras, est activée la caméra pour laquelle un écart de taille, en fonction de l'angle de vision, constaté tombe en dessous de la valeur prédéfinie.
